# EUROPÄISCHE PATENTANMELDUNG

(11) **EP 4 201 671 A1**
(43) Veröffentlichungstag der Anmeldung: **28.06.2023**
(21) Anmeldenummer: 22214037.8
(22) Anmeldetag: 16.12.2022
(51) Int. Cl.: B32B 27/08, B32B 27/18, B32B 27/30, B32B 27/36, B32B 27/40, B32B 3/26, B32B 3/28, B32B 7/023, B32B 17/10, G09F 13/00

(54) **BELEUCHTETE SENSORABDECKUNG MIT DREIDIMENSIONALEM DEKOR**

(30) Priorität: 23.12.2021 EP 21217575
(71) Anmelder: Covestro Deutschland AG, 51373 Leverkusen (DE)
(72) Erfinder: Hagen, Rainer, Leverkusen (DE); Thust, Torsten, Wermelskirchen (DE); Kuenzel, Roland, Leverkusen (DE); Schmeer, Holger, Köln (DE); Kuenzel, Jonas, Leverkusen (DE)
(74) Vertreter: Levpat

(57) **Zusammenfassung**

Die Erfindung betrifft einen Schichtaufbau beinhaltend eine erste Schicht a. mit einer ersten planen Oberfläche A und einer der ersten Oberfläche A gegenüberliegenden, zumindest über einen Teilbereich gegenüber der ersten Oberfläche A angewinkelten Oberfläche A', wobei die Schicht a. ein transparentes Material aufweist, vorzugsweise Glas oder ein thermoplastisches Polymer, bevorzugt ausgewählt aus der Gruppe bestehend aus einem Polycarbonat, einem Copolycarbonat, Polyestercarbonat, PMMA, PET, einem Polyurethan, einem thermoplastischen Polyurethan oder einer Mischung aus mindestens zwei hiervon beinhaltet; eine weitere Schicht b. mit einer ersten planen Oberfläche B und einer der ersten Oberfläche B gegenüberliegenden, zumindest über einen Teilbereich gegenüber der ersten Oberfläche B angewinkelten Oberfläche B', wobei die Schicht b. ein transparentes Material aufweist, vorzugsweise Glas oder ein thermoplastisches Polymer, bevorzugt ausgewählt aus der Gruppe bestehend aus einem Polycarbonat, einem Copolycarbonat, Polyestercarbonat, PMMA, PET, einem Polyurethan, einem thermoplastischen Polyurethan oder einer Mischung aus mindestens zwei hiervon beinhaltet; wobei die Schichten a. und b. so zu einander angeordnet sind, dass die planen Oberflächen A und B parallel zueinander verlaufen und die angewinkelten Oberflächen A' und B' einander zugewandt sind und einen einander entsprechenden Verlauf der Winkelung unter Ausbildung einer 3-D Struktur aufweisen, und wobei eine Zwischenschicht c. zwischen der angewinkelten Oberfläche A' der ersten Schicht a. und der angewinkelten Oberfläche B' der weiteren Schicht b. so angeordnet ist, dass sie in ihrer Längsausdehnung dem angewinkelten Verlauf folgt und die 3-D Struktur abbildet, und wobei sich die Brechungsindices der Schichten b. und c. oder und der Schichten a. und c. jeweils um ≤ 0,1, bevorzugt um ≤ 0,05, mehr bevorzugt um ≤ 0,04, weiter bevorzugt um ≤ 0,03 unterscheiden, sowie dessen Herstellverfahren und eine Beleuchtungsanlage beinhaltend einen erfindungsgemäßen Schichtaufbau.

## Beschreibung

Die Erfindung betrifft einen Schichtaufbau, beinhaltend mindestens eine erste Schicht a. mit einer ersten planen Oberfläche A und einer der ersten Oberfläche A zumindest über einen Teilbereich gegenüber der ersten Oberfläche A angewinkelt angeordneten Oberfläche A', und eine weitere Schicht b. mit einer ersten planen Oberfläche B und einer der ersten Oberfläche B zumindest über einen Teilbereich gegenüber der ersten Oberfläche B angewinkelt angeordneten Oberfläche B', wobei die Schichten a. und b. so zu einander angeordnet sind, dass die planen Oberflächen A und B parallel zueinander verlaufen aber einander abgewandt sind und die Oberflächen A' und B' einander zugewandt sind und einen einander entsprechenden Verlauf der Winkelung unter Ausbildung einer 3D-Struktur aufweisen, und wobei eine Zwischenschicht c. zwischen der Oberfläche A' der ersten Schicht a. und der Oberfläche B' der weiteren Schicht b. so angeordnet ist, dass sie in ihrer Längsausdehnung dem Verlauf der Oberflächen A' und B' folgt und die 3D-Struktur bildet, und wobei sich die Brechungsindices der Schichten b. und c. und der Schichten a. und c. jeweils um ≤ 0,1, bevorzugt um ≤ 0,05, mehr bevorzugt um ≤ 0,04, weiter bevorzugt um ≤ 0,03 unterscheiden.

Der erfindungsgemäße Schichtaufbau, der bevorzugt als dekorativer Mehrschichtkörper dient und im Folgenden auch als 3D-Dekor bezeichnet wird, wird bevorzugt mit einer Lichtquelle, auch Dekorlicht genannt, und einem Sensorelement kombiniert.

Der erfindungsgemäße Schichtaufbau umfasst einen Dekorlicht-Effekt mit zwei visuell unterschiedlichen Zuständen: Die 3D-Struktur kann mittels einer Lichtquelle, kontrastreich optisch sichtbar gemacht werden (erster Zustand), während sie in ambienter Lichtumgebung (zweiter Zustand) für das Auge unsichtbar bleibt und als gleichförmige Black Panel Fläche erscheint.

Die Erfindung betrifft außerdem die Verwendung des erfindungsgemäßen Schichtaufbaus als Abdeckung für einen Umfeldsensor, insbesondere einen Infrarot-Lasersensor vom Typ LiDAR (Light Detection and Ranging).

Im Automobilbereich wird eine zunehmende Zahl an Sensoren vom Typ Infrarotkamera oder LiDAR (Light Detection and Ranging) verbaut, die den Innenraum oder die Umgebung eines Fahrzeugs im Sichtfeld des Sensors dreidimensional erfassen. Diese Sensoren senden infrarotes Licht aus, detektieren von der Umgebung zurückgestreutes infrarotes Licht, und erstellen ein räumliches Punktmuster von sensorisch erfassten Objekten. Diese Sensoren weisen eine Sensorabdeckung aus Glas oder Kunststoff auf, die das Sensorsystem vor Umwelteinflüssen schützt und zugleich optischen Anforderungen genügt. Für die vorliegende Erfindung relevant sind Kunststoffabdeckungen.

Es ist ein wichtiges Entwicklungsziel für Automobilhersteller und Zulieferer, die Sensoren optisch zu verstecken, d.h. hinter geschlossenen Kunststoffabdeckungen, z.B. im Format eines Kühlergrills, zu platzieren. Bisher ist es nicht möglich, die Gestaltungsfreiheiten für die Kunststoffabdeckung, z.B. in Form von 3-dimensional (3D) ausgeführten Dekoren, mit den optischen Anforderungen des Sensors in Einklang zu bringen: Im durchstrahlten Bereich -in der Regel identisch mit dem Sichtfeld des Sensors - müssen alle innen- und außenliegenden Grenzflächen der meist mehrlagigen Kunststoffabdeckung möglichst parallel zueinander und ohne Stufen, Profilierung und Texturierung sein, das es sonst zu optischen Verzerrungen des emittierten und des detektierten Lichts kommt. Ein 3D-Dekor hätte somit negative Auswirkungen auf die Sensorfunktion, z.B. in Form von Bildverzerrungen, Verlust der Auflösung, Doppelbilder oder Sensorblindheit in Teilbereichen.

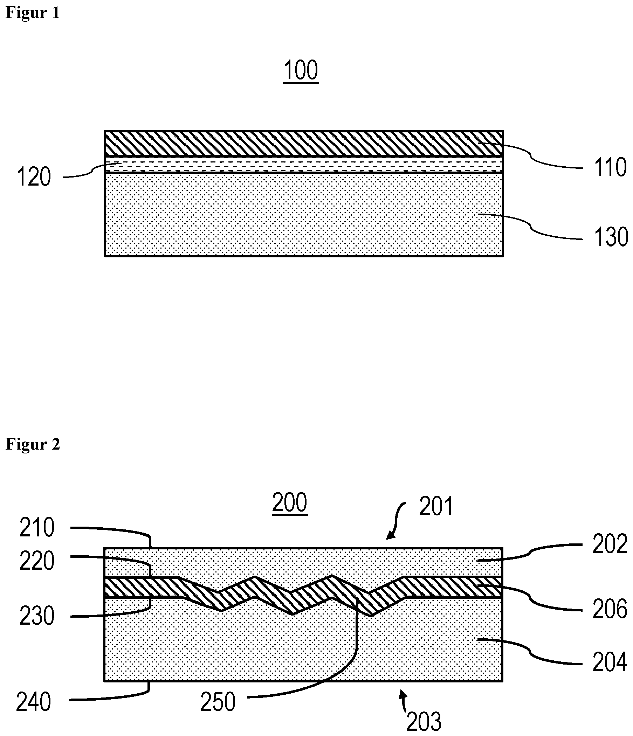

Schwarze LiDAR-Abdeckungen, die im Bereich der infraroten Sensorwellenlängen transparent sind, sind aus WO 2019/121347 A1 bekannt. Die Abdeckungen bestehen im Grundkörper aus thermoplastischem Material, insbesondere aus Polycarbonat (PC). Ebenso ist dort ein Mehrschichtkörper beschrieben, der zusätzlich zum PC-Grundkörper einen Schutzlack aufweist. Figur 1 zeigt den Schichtaufbau einer solchen LiDAR-Abdeckung nach dem Stand der Technik (SdT). Die PC-Abdeckung kann im Spritzgussverfahren mit anschließendem Lackierschritt hergestellt werden. Die Form der Abdeckung muss den Anforderungen des Spritzgusses an gute Oberflächen genügen, und kann daher z.B. als Freiformfläche ausgeführt sein. In dieser Schrift ist ein Beispiel für ein LiDAR-System gezeigt, bei dem die Abdeckung deutlich größer als das Sichtfeld des Sensors ist. Im Sichtfeld des Sensors muss die Oberfläche optisch ausgelegt, d.h. als Linse mit glatter Oberfläche gestaltet sein.

US 10,739,440 B2 beschreibt eine rechteckige, glatte LiDAR-Abdeckung, bestehend z.B. aus Polycarbonat (PC) oder Polymethylmethacrylat (PMMA), die so ausgelegt ist, dass sie in den durchstrahlten, d.h. sensorisch aktiven Fensterbereichen, infrarotes Licht transmittiert und sichtbares Licht absorbiert. In sensorisch nicht aktiven Fensterbereichen ist sie absorbierend bedruckt. Die sensorisch aktiven Fensterbereiche erstrecken sich als horizontale Streifen über die Abdeckung. Dieses Design ist gut geeignet für horizontal scannende LiDAR-Sensoren mit geringer vertikaler Auflösung.

3D-Kunststoff-Dekore sind bekannt. 3D-Dekore auf Basis von thermoplastischer Folie sind bekannt. So beschreibt WO 2020/212240 A1 eine thermoplastische Folienschicht, die eine optische Information (Dekor) trägt, die mit einem Polycarbonat- oder PC-Blend-Träger hinterspritzt ist. Dieser SdT ist nicht als LiDAR-Abdeckung einsetzbar, weil die 3D-Oberfläche das Sensorlicht optisch brechen oder streuen würde, was Signalverluste und Signal-Übersprechen (auch Cross-Talk genannt) bedingen würde. Die Ursachen für die optische Störung sind nicht-parallele Ein- und Austrittsflächen, die den Laserstrahl linsenartig aus seiner ursprünglichen (kalibrierten) Propagationsrichtung bringen würden, ebenso wie Streuzentren, z.B Partikel, raue Oberflächen, kleine Radien in der Topographie, die Teile des Laserlichts in falsche Richtungen lenken würden.

WO 2021/193769 A1 bietet eine Lösung für das Problem der optischen Brechung an: Die 3D-Dekorschicht ist innenliegend und zwischen zwei transparenten und zueinander Brechungsindexangepassten Platten mit glatten Außenseiten eingebettet. Der Brechungsindexunterschied zwischen Deckplatte und Grundplatte ist dabei nicht größer als 0,05. Bei gleichzeitig dünner Innenschicht wären die induzierten Richtungsfehler für den propagierenden Laserstrahl ausreichend gering. Die Außenschichten bestehen z.B. aus Polycarbonat. Die Dekorschicht besteht z.B. aus einem Metall.

Diese Lösung gilt nicht für nicht Dekorschichten, die einen Brechungsindexunterschied zu einer der außenliegenden Schichten aufweisen. Die Schrift weist in der Regel den Brechungsindex der Dekorschicht nicht auf. Ebenso würde eine metallische Schicht Reflexionsverluste und Streuverluste für ausgehende Laserstahlen und von Objekten zurückgestreute Signale bedeuten. Ferner würden spekular reflektierende und diffus reflektierende metallische Schichten Licht in den innenliegenden Bereich des Sensorsystems lenken, welches den Detektor erreichen könnte, was wiederum den Signalpegel erhöht und die Empfindlichkeit bzw. Effizienz des Sensors verringert.

Aus dem SdT lässt sich also kein Schichtaufbau mit 3D-Dekordesign und keine Handlungsvorschrift zur Herstellung desselben ableiten, welche als ausreichend störungsarme und verlustarme LiDAR-Sensorabdeckung verwendet werden könnte.

Eine erste Aufgabe war es daher, mindestens einen Nachteil aus dem SdT zumindest zu einem Teil zu überwinden oder zumindest zu minimieren. Weiterhin war es eine Aufgabe der Erfindung eine Abdeckung, bspw. in Form eines Schichtaufbaus, für LiDAR-Abdeckungen und anderen möglichen Funktionselementen mit integrierter 3D-Struktur bereitzustellen, der sowohl die Darstellung der 3D-Struktur ermöglicht, als auch die Sensorfunktion hinter der Abdeckung erhält. Des Weiteren war es eine Aufgabe eine Beleuchtungsanlage bereitzustellen, die es ermöglicht Sensorsysteme, Funktionsleuchten und 3D-Dekorleuchten in geschlossene, dekorative thermoplastische Formteile zu integrieren. Weiterhin war es eine Aufgabe der Erfindung, ein 3D-Dekor bereitzustellen, das im Sichtfeld eines Sensors liegt und möglichst kompakt gebaut ist. Eine weitere Aufgabe war es, ein 3D-Dekor, in Form eines Schichtaufbaus bereitzustellen, das eine gemeinsame Abdeckscheibe für dahinter gruppierte Elemente aufweist, die den Schichtaufbau enthält, so dass eine kombinierte Beleuchtungs-/Sensor-/Anzeigeanlage bereitgestellt wird. Dabei sollen die 3D-Dekorelemente und Lichtelemente im Bereich des Sensorsichtfeld und eines Displays oder Display-Anzeigefelds positioniert sein, ohne dass Verzerrungen des Sensorbildes und des Anzeigebildes verursacht werden. Dabei sollen Dekorlicht- und Display-Funktionen lateral überlappen können, so dass sie teilweise oder ganz die gleichen Flächen in der Abdeckscheibe nutzen, ohne dass es zu den oben beschriebenen funktionellen Einschränkungen kommt. Des Weiteren war es eine Aufgabe der Erfindung ein Verfahren zur Herstellung einer zuvor beschriebenen Abdeckscheibe, in Form eines Schichtaufbaus, bereit zu stellen.

Aufgabe der vorliegenden Erfindung war es deshalb, einen Schichtaufbau mit 3D-Dekordesign zur Verfügung zu stellen, der als ausreichend störungsarme und verlustarme LiDAR-Sensorabdeckung verwendet werden kann. Eine weitere Aufgabe der vorliegenden Erfindung war es, ein Verfahren zur Herstellung eines solchen Schichtaufbaus zur Verfügung zu stellen.

Überraschenderweise wurde ein mehrlagiger Schichtaufbau mit innenliegender 3D-Struktur gefunden, der als Abdeckung im Sinne der technischen Aufgabe verwendet werden kann.

Der erfindungsgemäße Schichtaufbau beinhaltet:
a1. eine erste Schicht a. mit einer ersten planen Oberfläche A und einer der ersten Oberfläche A gegenüberliegenden, zumindest über einen Teilbereich gegenüber der ersten Oberfläche A angewinkelt angeordneten Oberfläche A', wobei die Schicht a. ein transparentes Material aufweist, vorzugsweise Glas oder ein thermoplastisches Polymer, bevorzugt ausgewählt aus der Gruppe bestehend aus einem Polycarbonat, einem Copolycarbonat, Polyestercarbonat, PMMA, PET, einem Polyurethan, einem thermoplastischen Polyurethan oder einer Mischung aus mindestens zwei hiervon;
a2. eine weitere Schicht b. mit einer ersten planen Oberfläche B und einer der ersten Oberfläche B gegenüberliegenden, zumindest über einen Teilbereich gegenüber der ersten Oberfläche B angewinkelt angeordneten Oberfläche B', wobei die Schicht b. ein transparentes Material aufweist, vorzugsweise Glas oder ein thermoplastisches Polymer, bevorzugt ausgewählt aus der Gruppe bestehend aus einem Polycarbonat, einem Copolycarbonat, Polyestercarbonat, PMMA, PET, einem Polyurethan, einem thermoplastischen Polyurethan oder einer Mischung aus mindestens zwei hiervon;
wobei die Schichten a. und b. so zu einander angeordnet sind, dass die planen Oberflächen A und B parallel zueinander verlaufen, bevorzugt einander abgewandt sind, und die angewinkelten Oberflächen A' und B' einander zugewandt sind und einen einander entsprechenden Verlauf der Winkelung unter Ausbildung einer 3D-Struktur aufweisen, und
wobei eine Zwischenschicht c. zwischen der Oberfläche A' der ersten Schicht a. und der Oberfläche B' der weiteren Schicht b. so angeordnet ist, dass sie in ihrer Längsausdehnung dem Verlauf der Oberflächen A' und B' folgt und die 3D-Struktur abbildet, und
wobei sich die Brechungsindices der Schichten b. und c. und der Schichten a. und c. jeweils um ≤ 0,1, bevorzugt um ≤ 0,05, mehr bevorzugt um ≤ 0,04, weiter bevorzugt um ≤ 0,03 unterscheiden, und
wobei Schicht b. oder Schicht c. bevorzugt als Licht absorbierende sog. Black Panel Schicht fungieren, gekennzeichnet durch eine Lichttransmission von 0 bis 50%, bevorzugt von 1 bis 45%, weiter bevorzugt von 3 bis 40%, noch weiter bevorzugt von 5 bis 35%, mehr bevorzugt von 10 bis 30, ganz besonders bevorzugt von 15 bis 25% aufweist, bestimmt nach DIN EN ISO 13468-2:2006-7.

Die erste Schicht a. und die weitere Schicht b. bilden bevorzugt jeweils eine Außenseite des Schichtaufbaus. Zusätzlich ist es bevorzugt, dass sich auf jeder dieser Außenseiten noch mindestens eine weitere Schicht oder mindestens eine Beschichtung befindet, wie später noch näher beschrieben.

Die erste Schicht a. wird mit oder ohne weitere Beschichtung im Folgenden auch Vorderseite oder Sichtseite des Schichtaufbaus genannt. Die Vorderseite ist die Seite des Schichtaufbaus, die von einem Betrachter des in eine Beleuchtungsanlage eingebauten Schichtaufbaus gesehen wird. Das ist folglich die Seite, von der aus ein Betrachter das 3D-Dekor sehen soll und kann, wenn es entsprechend beleuchtet wird. Die Innenseite bzw. Rückseite des Schichtaufbaus ist die Seite, die zu möglichen Anzeige-Elementen bzw. einer rückseitigen Beleuchtung gerichtet ist und die von der weiteren Schicht b. mit oder ohne weitere Beschichtung gebildet wird.

Unter parallel wird im Rahmen der vorliegenden Erfindung eine Abweichung der Oberflächen A zu B von weniger als 5°, bevorzugt von weniger als 3° verstanden.

Unter angewinkelt angeordneten Oberflächen A' bzw. B' wird im Rahmen der vorliegenden der Erfindung verstanden, dass die Oberflächen A' bzw. B' gegenüber den parallel zueinander verlaufenden Oberflächen A bzw. B der Schichten a. bzw. b. mindestens an einer Stelle nicht koplanar zueinander verlaufen, sodass ihre Flächenelemente einen Winkel von bis zu 85° einschließen können. Bevorzugt liegt die Anwinkelung der Oberfläche A' zu der Oberfläche A und die Anwinkelung der Oberfläche B' zu der Oberfläche B in einem Bereich von 2 bis 85°, weiter bevorzugt in einem Bereich von 3 bis 45°, besonders bevorzugt in einem Bereich von 3 bis 30°.

Der Teilbereich in dem die Oberfläche A' gegenüber der Oberfläche A angewinkelt ist, beträgt bevorzugt 10 bis 99 %, weiter bevorzugt 15 bis 95 %, besonders bevorzugt 20 bis 95 %, bezogen auf die Gesamtfläche der Oberfläche A'.

Der Teilbereich in dem die Oberfläche B' gegenüber der Oberfläche B angewinkelt ist, beträgt bevorzugt 10 bis 99 %, weiter bevorzugt 15 bis 95 %, besonders bevorzugt 20 bis 95 %, bezogen auf die Gesamtfläche der Oberfläche B'.

Bevorzugt verlaufen die Flächenelemente der Oberflächen A' und B' nahezu parallel zu einander, sodass sich eine regelmäßige 3D-Struktur ausbildet.

Unter nahezu parallel wird eine Abweichung der Oberflächen A' zu B' von weniger als 5°, bevorzugt von weniger als 3° und besonders bevorzugt von weniger als 1° verstanden.

Bei der 3D-Struktur kann es sich um jegliche Form handeln, die der Fachmann hierfür auswählen würde. Bevorzugt handelt es sich um 3D-Strukturen ausgewählt aus der Gruppe bestehend aus zickzackförmig, wellenförmig, insbesondere sinusförmig oder Kombinationen aus mindestens zwei hiervon.

Handelt es sich um eine wellenförmige 3D-Struktur so bildet die Tangente an jeder Stelle der Oberfläche A' bzw. B' gegenüber der Oberfläche A bzw. B den Bezugspunkt für die angegebenen Winkel der Anwinkelung.

Bevorzugt weist die Schicht a. eine Dicke in einem Bereich von 100 µm bis 7 mm, bevorzugt in einem Bereich von 150 µm bis 5 mm, besonders bevorzugt in einem Bereich von 200 µm bis 2 mm auf. Bevorzugt weist die Schicht a. eine Dickenabweichung über ihre gesamte Flächenausdehnung von weniger als 20 %, bevorzugt weniger als 10 %, besonders bevorzugt von weniger als 5 % auf.

Bevorzugt weist die Schicht b. eine Dicke in einem Bereich von 100 µm bis 7 mm, bevorzugt in einem Bereich von 150 µm bis 5 mm, besonders bevorzugt in einem Bereich von 200 µm bis 2 mm auf. Bevorzugt weist die Schicht b. eine Dickenabweichung über ihre gesamte Flächenausdehnung von weniger als 20 %, bevorzugt weniger als 10 %, besonders bevorzugt von weniger als 5 % auf.

Bevorzugt weist die Schicht c. eine Dicke in einem Bereich von 10 bis 1000 µm, bevorzugt in einem Bereich von 50 bis 750 µm, besonders bevorzugt von 125 bis 600 µm, ganz besonders bevorzugt von 250 bis 500 µm, am meisten bevorzugt von 300 bis 400 µm auf. Bevorzugt weist die Schicht c. eine Dickenabweichung über ihre gesamte Flächenausdehnung von weniger als 20 %, bevorzugt weniger als 10 %, besonders bevorzugt von weniger als 5 % auf.

Bevorzugt weist der Schichtaufbau eine Dicke in einem Bereich von 350 µm bis 10 mm, besonders bevorzugt in einem Bereich von 2 bis 6 mm auf. Bevorzugt weist der Schichtaufbau eine Dickenabweichung über seine gesamte Flächenausdehnung von weniger als 20 %, bevorzugt weniger als 10 %, besonders bevorzugt von weniger als 5 % auf.

Aufgrund der Abwinkelung der Oberflächen A' und B' weist die aus der Schicht c. gebildete 3D-Struktur bevorzugt eine Tiefenausdehnung innerhalb des Schichtaufbaus, die sich senkrecht zu den parallel ausgebildeten Oberflächen A und B der Schichten a. und b. erstreckt, in einem Bereich von 100 bis 1000 µm, mehr bevorzugt in einem Bereich von 150 bis 800 µm, besonders bevorzugt in einem Bereich von 200 bis 500 µm.

Die Schichten a., b. oder c. weisen jeweils unabhängig voneinander bevorzugt eine Flächenausdehnung in einem Bereich von 1 cm² bis 10 m², mehr bevorzugt in einem Bereich von 10 cm² bis 5 m², besonders bevorzugt in einem Bereich von 100 cm² bis 1 m² auf.

In einer bevorzugten Ausführungsform des Schichtaufbaus weist dieser bevorzugt eine, weiter bevorzugt zwei, besonders bevorzugt drei, ganz besonders bevorzugt vier der folgenden Merkmale auf:
(E1) Die Oberfläche A der Vorderseite, also der Außenfläche der Schicht a. und die Oberfläche B der Rückseite, also der Außenseite von Schicht b. sind glatt. Unter glatt wird verstanden, dass die Oberflächen A und B keine Stufen größer als 0,1 mm und keine Krümmungsradien kleiner als 10 mm aufweisen; weiterhin bevorzugt ist, dass die Oberflächen A und B eine Rautiefe Rz nach DIN EN ISO 4287 (10/98) von maximal 50 µm, bevorzugt von maximal 10 µm aufweisen.
(E2) die Schicht a. ist transparent. Unter transparent wird verstanden, dass die Schicht a. im sichtbaren Licht-Spektrum teil- oder volltransparent ist, bevorzugt einen totalen Lichttransmissionsgrad von > 70%, bevorzugt von >80%, mehr bevorzugt von > 85% bestimmt nach DIN EN ISO 13468-2:2006-7. Bevorzugt weist die Schicht a. eine spektrale Absorption nur außerhalb der Emissionsspektren des Ambientelichts oder des Lichts vom Display oder Dekors auf.
(E3) die Schicht a. ist bevorzugt als ein flächiger Lichtleiter ausgebildet. Unter Lichtleiter im Zusammenhang mit Schicht a. wird verstanden, dass Licht, z.B. weißes oder farbiges LED-Licht, über eine oder mehrere seiner Kanten eingekoppelt werden kann und das Licht mit ausreichend geringer optischer Dämpfung in der Schicht a. propagieren kann.
(E4) mindestens eine der Schichten b. oder c. weist einen Absorptionsbereich im sichtbaren Spektrum auf. Beispiele sind transparent farbig und transparent Neutraldichte-grau. Unter Absorptionsbereich wird verstanden, dass die Schicht b. bzw. c. eine Lichttransmission von 0 bis 50%, bevorzugt von 1 bis 45%, weiter bevorzugt von 3 bis 40%, noch weiter bevorzugt von 5 bis 35%, mehr bevorzugt von 10 bis 30%, ganz besonders bevorzugt von 15 bis 25% aufweist, bestimmt nach DIN EN ISO 13468-2:2006-7.

Bevorzugt weist der Schichtaufbau eine Eigenschaft oder Eigenschaftskombination ausgewählt aus der Gruppe bestehend aus (E1); (E2); (E3); (E4); (E1) und (E2); (E1) und (E3); (E1) und (E4); (E1) und (E5); (E2) und (E3); (E2) und (E4); (E3) und (E4); (E1) und (E2) und (E3); (E1) und (E2) und (E4); (E1) und (E3) und (E4); (E2) und (E3) und (E4); (E1) und (E2) und (E3) und (E4), besonders bevorzugt (E1) und (E2) und (E3) oder (E2) und (E3) und (E4) oder (E1) und (E2) und (E3) und (E4) auf.

Bevorzugt weist der Schichtaufbau die folgenden Merkmale auf:
(E1) die Oberfläche A der Vorderseite, also der Außenfläche der Schicht a. und die Oberfläche B der Rückseite, also der Außenseite von Schicht b. sind glatt;
(E2) die Schicht a. ist transparent;
(E3) optional, die Schicht a. ist als ein flächiger Lichtleiter ausgebildet.

In einer bevorzugten Ausführungsform des Schichtaufbaus weist dieser das folgende Merkmal auf:
(E4) mindestens eine der Schichten b. oder c., bevorzugt beide Schichten b. und c., weist einen Absorptionsbereich im sichtbaren Spektrum auf, insbesondere eine Lichttransmission von 0 bis 50%, bevorzugt von 1 bis 45%, weiter bevorzugt von 3 bis 40%, noch weiter bevorzugt von 5 bis 35%, mehr bevorzugt von 10 bis 30%, ganz besonders bevorzugt von 15 bis 25% aufweist, bestimmt nach DIN EN ISO 13468-2:2006-7. Bevorzugt weisen beide Schicht b. und c. eine Lichttransmission von 0 bis 10% auf.

Die Schicht c. ist im Bereich des sichtbaren Lichts brechungsindexangepasst zu den Schichten a. und b.. Hierdurch ist die 3D-Struktur in ambienter Lichtumgebung und im ausgeschalteten Zustand aller künstlichen Lichtquellen, Hinterleuchtungslicht und LED-Kantenlicht, unsichtbar gemacht. Unter brechungsindexangepasst wird verstanden, dass sich die Brechungsindices n der Schichten b. und c. und der Schichten a. und c. jeweils um ≤ 0,1, bevorzugt um ≤ 0,05, mehr bevorzugt um ≤ 0,04, weiter bevorzugt um ≤ 0,03 unterscheiden. Der Brechungsindex n ist definiert als Wert für das Verhältnis der Lichtgeschwindigkeit im Vakuum zur Lichtgeschwindigkeit im Medium (Schicht) und bezieht sich auf die Natrium-D-Linie bei der Wellenlänge 589 nm, zugleich die Standardwellenlänge bei Refraktometern. Wenn nicht anders angegeben wurde der Brechungsindex gemäß ISO 489 (Verfahren A) ermittelt.

Die Schichten a. und b. weisen bevorzugt ein thermoplastisches Material auf oder bestehen daraus. Bevorzugt weist Schicht c. ebenfalls ein thermoplastisches Material auf.

Das thermoplastische Material ist bevorzugt ausgewählt aus der Gruppe bestehend aus aromatischem Polycarbonat (PC), einschließlich Copolycarbonat, Polyestercarbonat, Polystyrol (PS), Styrol-Copolymeren wie z.B. transparentes Polystyrolacrylnitril (PSAN), Polyalkylenen wie Polyethylen (PE) und Polypropylen (PP), aromatischem Polyester wie Polyethylenterephthalat (PET) und Polybutylenterephthalat (PBT), PET-Cyclohexandimethanol-Copolymer (PETG), Polyethylennaphthalat (PEN), Polyphenylenether (PPE), Polyacrylat, Copolyacrylat, insbesondere Poly- oder Copolymethylmethacrylaten wie Polymethylmethacrylat (PMMA), Polyimide (z.B. PMMI), amorphen Polyamiden (PA), Polyethersulfonen, thermoplastischen Polyurethanen, cyclischen Olefinpolymeren oder -copolymeren (COP bzw. COC) oder eine Mischungen mindestens zweier der genannten Komponenten. Bevorzugt ist das thermoplastische Material transparent. Bevorzugt basier das thermoplastische Material auf aromatischem Polycarbonat und/oder Polymethylmethacrylat, besonders bevorzugt auf aromatischem Polycarbonat oder besteht daraus.

Beispiele für bevorzugte thermoplastischen Polymere, insbesondere in Form von thermoplastischen Polymeren werden im Zusammenhang mit dem weiter unten beschriebenen erfindungsgemäßen Verfahren zur Herstellung eines Schichtaufbaus genannt, weshalb an dieser Stelle auf deren Beschreibung verwiesen wird. Alle im Zusammenhang mit dem erfindungsgemäßen Verfahren beschriebenen thermoplastischen Materialien, deren Zusammensetzungen, inklusive Mengenverhältnissen, Herstellung und Eigenschaften sind ebenfalls für die entsprechenden Schichten a., b. und c. des erfindungsgemäßen Schichtaufbaus gültig.

Alternativ weist mindestens eine der Schichten a. oder b. ein Glas, ausgewählt aus der Gruppe bestehend aus einem Quarzglas, einem Borsilikatglas, einem Fluorsilikatglas, einem Fluoridglas, einem Borphosphatglat, einem Bleiglas, einem Alumosilikatglas oder einer Kombination aus mindestens zwei hiervon, auf.

In einer bevorzugten Ausführungsform des Schichtaufbaus ist die weitere Schicht c. blasenfrei mit den Schichten a. und b. verbunden. Blasenfrei gemäß der Erfindung beutet, dass keine Blasen mit bloßem Auge, bevorzugt bei einer 20-fachen Vergrößerung zu erkennen sind.

In einer bevorzugten Ausführungsform des Schichtaufbaus beinhaltet die weitere Schicht c. ein transparentes, thermoplastisches Polymer, bevorzugt ausgewählt aus der Gruppe bestehend aus einem Polycarbonat, einem Copolycarbonat, einem Polymethylmethacrylat (PMMA), einem Polyethylenterephthalat (PET), einem Blend beinhaltend mindestens eines der vorstehenden Polymere oder einer Mischung aus mindestens zwei hiervon.

Die Schicht c, ist bevorzugt eine technische Folie oder eine Beschichtung, während die beiden äußeren Schichten a. und b. bevorzugt aus einem thermoplastischen Kunststoff bestehen, der mittels eines Spritzguss- oder Direktbeschichtungsverfahrens (engl.: Direct Coating, Direct Skinning) hergestellt werden kann. Diese Schicht c. dient dazu, ein Dekor in Form der 3D-Struktur durch ihre Verformung darzustellen oder aber gleichzeitig das Dekor und ein oder mehrere Symbole oder Text durch weitere Veredelungsschritte wie das Bedrucken darzustellen (sog. 2D-Dekore).

Die Schicht c. ist bevorzugt eine thermoplastische Folie, bevorzugt bestehend aus Polycarbonat. Alternativ kann die Schicht c. eine der folgenden Materialien beinhalten oder daraus bestehen: PMMA, PET. Beispiele: Makrofol^{®} LM Polycarbonat Black Panel Folie (Hersteller: Covestro AG, Deutschland), Hostaphan^{®} WNL transluzent-weiße Polyesterfolie für Laminieranwendungen, Hostaphan^{®}YNK gelbe Polyesterfolie (Hersteller: Mitsubishi Polyester Film GmbH, Deutschland), PLEXIGLAS^{®} Folien in transparent blau, gelb, grün, rot, orange und braun (Hersteller: Röhm GmbH, Deutschland).

Die Schicht c. ist transparent im Arbeitswellenlängenbereich des LiDAR-Lasers, charakterisiert durch eine Absorption im gesamten Laserwellenlängenbereich von kleiner als 20%, bevorzugt kleiner als 5%, mehr bevorzugt kleiner als 2%, bestimmt durch Nah-Infrarot-Spektroskopie.

Die Schicht c. ist optisch klar, d.h. nicht trüb im Arbeitswellenlängenbereich des LiDAR-Lasers, bevorzugt im Wellenlängenbereich von 800 bis 1600 nm, charakterisiert durch eine Trübung kleiner als 5%, bevorzugt kleiner als 2%, mehr bevorzugt kleiner als 1%, bestimmt durch Nah-Infrarot-Spektroskopie, in Anlehnung an Vorschrift ASTM D1003. Die Trübung ist definiert durch den Anteil diffuser Transmission an der totalen Transmission gemessen bei der Laserwellenlänge.

Bevorzugt sind die Schichten a. und b. optisch klar, d.h. nicht trüb im Arbeitswellenlängenbereich des LiDAR-Lasers, bevorzugt im Wellenlängenbereich von 800 bis 1600 nm, charakterisiert durch eine Trübung kleiner als 5%, bevorzugt kleiner als 2%, mehr bevorzugt kleiner als 1%, bestimmt durch Nah-Infrarot-Spektroskopie, in Anlehnung an Vorschrift ASTM D1003.

Der Arbeitswellenlängenbereich des LiDAR Lasers liegt im infraroten Spektrum und beschreibt das mögliche Spektrum von Laserwellenlängen im Betriebszustand.

Der LiDAR-Laser weist bevorzugt folgende Zentralwellenlängen auf: 840 nm, 870 nm, 905 nm, 1330 nm, 1350 nm, 1550 nm. Die Arbeitswellenlängen, d.h. die im Sensorbetrieb vorliegenden Wellenlängenbereiche liegen im Bereich der genannten Zentralwellenlängen mit einer gesamten spektralen Breite von typischerweise 20 bis 30 nm. Bevorzugt wird die Schicht c. mittels Laserstrukturierung, Tintenstrahldruck, Laserdruck, Digitaldruck, Offset-Druck oder Siebdruck mit optischer Information außerhalb des Sichtfelds des Sensors versehen. Das ermöglicht es, die Sensorfunktion zu erhalten und gedruckte Designs in die aktiven Bereiche z.B. eines dahinterliegenden Displays, zu bringen. Verschiedene Drucktechnologien bieten unterschiedliche Vorteile: Der Siebdruck ist das am häufigsten für Polycarbonat-Folien angewandte Druckverfahren, bei dem direkt auf das Medium gedruckt wird. Der Siebdruck ergibt haltbare, langlebige Druckbilder mit hoher Opazität und Farbdichte. Der Offset-Druck eignet sich wegen der hohen Druckgeschwindigkeit besonders zur wirtschaftlichen Produktion großer Auflagen und für die Erzeugung sehr feiner Linienmuster. Der Digitaldruck ermöglicht schließlich vollkommene Flexibilität bei Geschwindigkeit und Volumen, da keine Druckform oder -platte benötigt wird und die Technologie für den Druck nach Bedarf bis hinab zu Einzelauflagen verwendet werden kann.

Bevorzugt weisen die Schichten a. und b. das gleiche Material auf. Weiterhin bevorzugt weisen alle drei Schichten a., b. und c. das gleiche Material auf. Bevorzugt ist das Material der Schicht a. und b. ein Polycarbonat. Bevorzugt ist das Material der Schicht a., b. und c. ein Polycarbonat. Bevorzugt ist das Material der Schicht a., b und c. ein PMMA. Weiterhin bevorzugt ist das Material der Schicht a., b und c. ein Polyamid.

In einer bevorzugten Ausführungsform des Schichtaufbaus weist die Schicht a. mindestens eine, bevorzugt mindestens zwei, weiter bevorzugt mindestens drei, besonders bevorzugt mindestens vier, mehr bevorzugt mindestens fünf, am meisten bevorzugt alle der folgenden Eigenschaften auf:
al. eine Dicke in einem Bereich von 100 µm bis 7 mm, bevorzugt von 150 µm bis 5 mm, besonders bevorzugt von 200 µm bis 2 mm;
a2. eine Fläche in einem Bereich von 1 cm² bis 10 m², bevorzugt von 10 cm² bis 5 m², besonders bevorzugt von 100 cm² bis 1 m²;
a3. eine Ausdehnung der gewinkelten Struktur quer zur Flächenausdehnung der Schicht a. in einem Bereich von 10 µm bis 1 cm, bevorzugt in einem Bereich von 20 µm bis 1000 µm, weiter bevorzugt in einem Bereich von 50 bis 500 µm;
a4. eine Rautiefe Rz auf der Oberfläche A nach DIN EN ISO 4287 (10/98) von maximal 10 µm, bevorzugt von maximal 5 µm, besonders bevorzugt von maximal 2 µm;
a5. eine Transparenz von >70%, bevorzugt von >80%, besonders bevorzugt von >85%, bestimmt nach DIN EN ISO 13468-2-2006-7;
a6. frei von Lichtstreuung im sichtbaren Spektralbereich und bevorzugt im nahen infraroten Spektralbereich, insbesondere frei von lichtstreuenden Partikeln.

Bevorzugt weist der Schichtaufbau eine Eigenschaft oder Eigenschaftskombination ausgewählt aus der Gruppe bestehend aus a1.; a2.; a3.; a4.; a5.; a6. a1. und a2.; a1. und a3.; a1. und a4.; a1. und a5.; a1. und a6.; a2. und a3.; a2. und a4.; a2. und a5.; a2. und a6.; a3. und a4.; a3. und a5.; a3. und a6.; a4. und a5.; a4. und a6.; a5. und a6.; a1. und a2. und a3.; a1. und a2. und a4.; a1. und a2. und a5.; a1. und a2. und a6.; a1. und a3. und a4.; a1. und a3. und a5.; a1. und a3. und a6.; a1. und a4. und a5.; a1. und a4. und a6.; a1. und a5. und a6.; a2. und a3. und a4.; a2. und a3. und a5.; a2. und a3. und a6.; a2. und a4. und a5.; a2. und a4. und a6.; a2. und a5. und a6.; a3. und a4. und a5.; a3. und a4. und a6.; a3. und a5. und a6.; a4. und a5. und a6.; a1. und a2. und a3. und a4.; a1. und a2. und a3. und a5.; a1. und a2. und a3. und a6.; a1. und a2. und a4. und a5.; a1. und a2. und a4. und a6.; a1. und a2. und a5. und a6.; a1. und a3. und a4. und a5.; a1. und a3. und a4. und a6.; a1. und a3. und a5. und a6.; a1. und a4. und a5. und a6.; a2. und a3. und a4. und a5.; a2. und a3. und a4. und a6.; a2. und a3. und a5. und a6.; a3. und a4. und a5. und a6.; a1. und a2. und a3. und a4. und a5.; a1. und a2. und a3. und a4. und a6.; a1. und a2. und a3. und a5. und a6.; a1. und a2. und a4. und a5. und a6.; a1. und a3. und a4. und a5. und a6.; besonders bevorzugt a1. und a2. und a3. oder a2. und a3. und a4. oder a1. und a2. und a3. und a4.; oder a1. und a2. und a3. und a4. und a5.; oder a1. und a2. und a3. und a4. und a6.; oder a1. und a2. und a3. und a4. und a5. und a6. auf. Ganz besonders bevorzugt weist der Schichtaufbau die Merkmale a5. und a6. auf.

In einer bevorzugten Ausführungsform des Schichtaufbaus weist die Schicht b. mindestens eine, bevorzugt mindestens zwei, weiter bevorzugt mindestens drei, besonders bevorzugt mindestens vier, ganz besonders bevorzugt fünf der folgenden Eigenschaften auf:
b1. eine Dicke in einem Bereich von 100 µm bis 7 mm, bevorzugt von 150 µm bis 5 mm, besonders bevorzugt von 200 µm bis 2 mm;
b2. eine Fläche in einem Bereich von 1 cm² bis 10 m², bevorzugt von 10 cm² bis 5 m², besonders bevorzugt von 100 cm² bis 1 m²;
b3. eine Rautiefe Rz auf der Oberfläche B nach DIN EN ISO 4287 (10/98) von maximal 10 µm, bevorzugt von maximal 5 µm, besonders bevorzugt von maximal 2 µm;
b4. eine Transparenz im sichtbaren Spektralbereich in einem Bereich von 10 bis 100%, bevorzugt von 15 bis 98%, besonders bevorzugt von 40 bis 95 %, ganz besonders bevorzugt von 70 bis 90 %, bestimmt nach DIN EN ISO 13468-2-2006-7;
b5. frei von Lichtstreuung im sichtbaren und bevorzugt im nahen infraroten Spektralbereich.

Bevorzugt weist die Schicht b. des Schichtaufbau eine Eigenschaft oder Eigenschaftskombination ausgewählt aus der Gruppe bestehend aus b1.; b2.; b3.; b4.; b5.; b1. und b2.; b1. und b3.; b1. und b4.; b1. und b5.; b2. und b3.; b2. und b4.; b2. und b5.; b3. und b4.; b3. und b5.; b4. und b5.; b1. und b2. und b3.; b1. und b2. und b4.; b1. und b2. und b5.; b1. und b3. und b4.; b1. und b3. und b5.; b1. und b4. und b5.; b2. und b3. und b4.; b2. und b3. und b5.; b2. und b4. und b5.; b3. und b4. und b5.; b1. und b2. und b3. und b4.; b1. und b2. und b3. und b5.; b1. und b2. und b4. und b5.; b1. und b3. und b4. und b5.; b2. und b3. und b4. und b5.; b1. und b2. und b3. und b4. und b5.; besonders bevorzugt b1. und b2. und b3. oder b1. und b2. und b3. und b4. oder b1. und b2. und b3. und b4. und b5. auf.

In einer bevorzugten Ausführungsform des Schichtaufbaus weist die Schicht c. mindestens eine, bevorzugt mindestens zwei, besonders bevorzugt mindestens drei, ganz besonders bevorzugt alle der folgenden Eigenschaften auf:
c1. eine Dicke in einem Bereich von 10 µm bis 1000 µm, bevorzugt in einem Bereich von 50 bis 750 µm, besonders bevorzugt von 125 bis 600 µm, ganz besonders bevorzugt von 250 bis 500 µm, am meisten bevorzugt von 300 bis 400 µm auf;
c2. eine Fläche in einem Bereich von 1 cm² bis 10 m²;
c3. eine Dickenvarianz über die gesamte Fläche in einem Bereich von 0,1 bis 1 µm, bevorzugt von 0,2 bis 0,5 µm;
c4. eine Transparenz im sichtbaren Spektralbereich in einem Bereich von 0 bis 99%, bevorzugt von 2 bis 90%, weiter bevorzugt von 5 bis 80%, besonders bevorzugt von 10 bis 70%, ganz besonders bevorzugt von 25 bis 30%;
c5. frei von Lichtstreuung im sichtbaren Spektralbereich und bevorzugt im nahen infraroten Spektralbereich.

Bevorzugt weist die Schicht c. des Schichtaufbau eine Eigenschaft oder Eigenschaftskombination ausgewählt aus der Gruppe bestehend aus c1.; c2.; c3.; c4.; c1. und c2.; c1. und c3.; c1. und c4.; c2. und c3.; c2. und c4; c3. und c4.; c1. und c2. und c3.; c1. und c2. und c4.; c1. und c3. und c4.; c2. und c3. und c4.; c1. und c2. und c3. und c4.; besonders bevorzugt c1. und c2. und c3. oder c1. und c2. und c3. und c4 auf.

In einer bevorzugten Ausführungsform des Schichtaufbaus weist der Schichtaufbau mindestens eine, bevorzugt mindestens zwei, mehr bevorzugt mindestens drei, besonders bevorzugt vier, am meisten bevorzugt alle der folgenden Eigenschaften auf:
(A1) eine Transparenz im Arbeitswellenlängenbereich des LiDAR-Lasers, bevorzugt im Wellenlängenbereich von 800 bis 1600 nm, charakterisiert durch eine Absorption im gesamten Laserwellenlängenbereich von kleiner als 20%, bevorzugt kleiner als 5%, mehr bevorzugt kleiner als 2%, bestimmt durch Nah-Infrarot-Spektroskopie, in Anlehnung an Vorschrift ASTM D1003;
(A2) schwach Licht streuend im sichtbaren Spektralbereich, gekennzeichnet durch einen Haze-Wert (Opazität, Trübung) nach ASTM D1003 von kleiner als 20%, bevorzugt kleiner als 15%, weiter bevorzugt kleiner als 10%;
(A3) eine Gesamttransmission Ty des Schichtaufbaus beträgt im sichtbaren Spektrum mindestens 1%, bevorzugt mindestens 2%, mehr bevorzugt mindestens 10%, besonders bevorzugt in einem Bereich von 1 bis 50%, bestimmt nach DIN ISO 13468-2:2006 (D65, 10°);
(A4) einen Halbwertswinkel des gestreuten Lichts im kompletten sichtbaren Wellenlängenbereich von 0 bis 15°, bevorzugt von 1 bis 10°, besonders bevorzugt von 2 bis 8°;
(A5) schwach Licht streuend im nahen Infrarot, gekennzeichnet durch eine Trübung, bestimmt durch Nah-Infrarot-Spektroskopie in Anlehnung an ASTM D1003, von kleiner als 5%, bevorzugt kleiner als 2%, mehr bevorzugt kleiner als 1%.

Insbesondere weist der Schichtaufbau das Merkmal (A5) und besonders bevorzugt die Merkmalskombination (A1) und (A2) und (A5) oder (A1) und (A2) und (A4) und (A5) auf.

Ein weiterer Aspekt der Erfindung betrifft ein Verfahren zur Herstellung eines Schichtaufbaus, bevorzugt des zuvor beschriebenen, erfindungsgemäßen Schichtaufbaus mit mindestens den Schritten:
I) Gießen eines verflüssigten Polymeren, bevorzugt ausgewählt aus der Gruppe bestehend aus Polycarbonat, Copolycarbonat, Polyestercarbonat, PMMA, PET, einem Polyurethan, einem thermoplastischen Polyurethan oder einer Mischung aus mindestens zwei hiervon in eine Form mit einer gewinkelten Oberfläche, wobei nach Verfestigung des Polymeres eine Schicht a. aus dem Polymer entsteht, die einer erste planare Oberfläche A und eine gewinkelte Oberfläche A' aufweist;
II) Auflegen einer weiteren Schicht c. auf die gewinkelte Oberfläche A', sodass die weitere Schicht c. den Verlauf der Winkelung in ihrer Längsausdehnung annimmt und eine 3D-Struktur ausbildet; bevorzugt wird die Schicht c. zuvor laminiert, bedruckt und/oder verformt;
III) Gießen eines Polymeren, bevorzugt ausgewählt aus der Gruppe bestehend aus Polycarbonat, Copolycarbonat, Polyestercarbonat, PMMA, PET, einem Polyurethan, einem thermoplastischen Polyurethan oder einer Mischung aus mindestens zwei hiervon, auf die Schicht c. aus Schritt II) unter Ausbildung einer Schicht b. wobei die gekrümmte Oberfläche A' sich spiegelbildlich in der Schicht b. als gewinkelte Oberfläche B' widerspiegelt;
wobei sich die Brechungsindices der Schichten b. und c. und der Schichten a. und c. jeweils um ≤ 0,1, bevorzugt um ≤ 0,05, mehr bevorzugt um ≤ 0,04, weiter bevorzugt um ≤ 0,03 unterscheiden, gemäß ISO 489 (Verfahren A) ermittelt. Der durch das erfindungsgemäße Verfahren erhaltene Schichtaufbau entspricht in seinem Aufbau, Eigenschaften und Zusammensetzung dem erfindungsgemäßen Schichtaufbau. Daher sind sämtliche Angaben zum erfindungsgemäßen Schichtaufbau auch für den durch das erfindungsgemäße Verfahren hergestellte Schichtaufbau anwendbar.

Das Gießen in Schritt I) kann auf jede Art erfolgen, die der Fachmann kennt, um Polymere zu gießen. Das Gießen ist bevorzugt ausgewählt aus der Gruppe bestehend aus Spritzguss, variothermer Spritzguss, Spritzprägen und Niederdruckspritzguss. Zu letzterem zählt das Reaction Injection Molding (RIM) Verfahren.

Das Auflegen der weiteren Schicht c. auf die gewinkelte Oberfläche A' in Schritt II) kann durch jede Art von Auflegen erfolgen, die der Fachmann hierfür auswählen würde. Bevorzugt findet das Auflegen durch eine Methode ausgewählt aus der Gruppe bestehend aus einem Druckluftpressen, einem Vakuumziehen oder einen Einlegen der Folie in das Werkzeug statt.

Das Gießen in Schritt III) kann auf jede Art erfolgen, die der Fachmann kennt, um Polymere zu gießen. Das Gießen ist bevorzugt ausgewählt aus der Gruppe bestehend aus Spritzguss mit Folieneinleger, genannt Folienhinterspritzen (FIM Verfahren) , aber auch variothermer Spritzguss, Spritzprägen und Niederdruckspritzguss ist möglich. Zu letzterem zählt das Reaction Injection Molding (RIM) Verfahren.

Das Polymer kann jedes Polymer sein, das der Fachmann für den Schichtaufbau auswählen würde. Bevorzugt ist das verflüssigte Polymer ausgewählt aus der Gruppe bestehend aus Polycarbonat, einem Polyurethan, einem thermoplastischen Polyurethan oder einer Mischung aus mindestens zwei hiervon.

Die Polycarbonate sind sowohl Homopolycarbonate als auch Copolycarbonate. Die Polycarbonate können in bekannter Weise linear oder verzweigt sein. Sofern im Rahmen der vorliegenden Erfindung von "Polycarbonaten" gesprochen wird, sind stets aromatische Polycarbonate gemeint, auch, wenn nicht explizit erwähnt.

Die Herstellung der Polycarbonate erfolgt in bekannter Weise aus Dihydroxyarylverbindungen, Kohlensäurederivaten, gegebenenfalls Kettenabbrechern und Verzweigern.

Einzelheiten der Herstellung von Polycarbonaten sind in vielen Patentschriften seit etwa 40 Jahren niedergelegt. Beispielhaft sei hier auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertne, BAYER AG, "Polycarbonates" in Encyclopedia of Polymer Science and Engineering, Volume 11, Second Edition, 1988, Seiten 648-718 und schließlich auf Dres. U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Für die Herstellung der Polycarbonate geeignete Dihydroxyarylverbindungen sind beispielsweise Hydrochinon, Resorcin, Dihydroxydiphenyle, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, alpha - alpha '-Bis-(hydroxyphenyl)-diisopropylbenzole, Phtalimidine abgeleitet von Isatin- oder Phenolphthaleinderivaten sowie deren kernalkylierte, kernarylierte und kernhalogenierte Verbindungen.

Bevorzugte Dihydroxyarylverbindungen sind 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-phenylethan, 1,3-Bis-[2-(4-hydroxyphenyl)-2-propyl]benzol (Bisphenol M), 1,1-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, 2,2-Bis-(3,5-dichlor-4-hydroxyphenyl)-propan, 2,2-Bis-(3,5-dibrom-4-hydroxyphenyl)-propan, 1,3-Bis-[2-(3,5-dimethyl-4-hydroxyphenyl)-2-propyl]-benzol und 1,1-Bis-(4-hydroxyphenyl)-3,3,5-trimethylcyclohexan (Bisphenol TMC) sowie die Bisphenole der Formeln (I) bis (III) 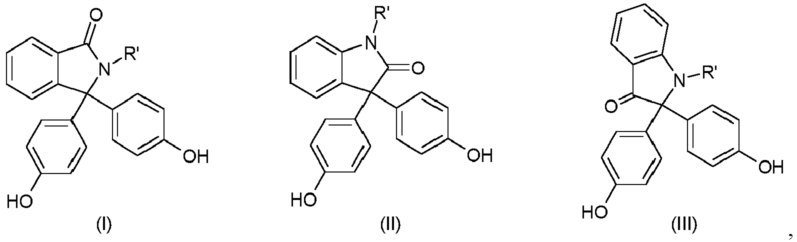 in denen R' jeweils für einen C1- bis C4-Alkylrest, Aralkylrest oder Arylrest, bevorzugt für einen Methylrest oder Phenylrest, ganz besonders bevorzugt für einen Methylrest, steht.

Besonders bevorzugte Dihydroxyarylverbindungen sind 4,4'-Dihydroxydiphenyl, 1,1-Bis-(4-hydroxyphenyl)-phenyl-ethan, 2,2-Bis-(4-hydroxyphenyl)-propan, 2,2-Bis-(3,5-dibrom-4-hydroxyphenyl)-propan, 2,2-Bis-(3,5-dichlor-4-hydroxyphenyl)-propan, 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC) sowie die Dihydroxyarylverbindungen der Formeln (I), (II) und/oder (III).

Diese und weitere geeignete Dihydroxyarylverbindungen sind z.B. in US 2 999 835 A, 3 148 172 A, 2 991 273 A, 3 271 367 A, 4 982 014 A und 2 999 846 A, in den deutschen Offenlegungsschriften 1 570 703 A, 2 063 050 A, 2 036 052 A, 2 211 956 A und 3 832 396 A, der französischen Patentschrift 1 561 518 A1, in der Monographie "H. Schnell, Chemistry and Physics of Polycarbonates, Interscience Publishers, New York 1964, S. 28 ff.; S.102 ff." sowie in "D.G. Legrand, J.T. Bendler, Handbook of Polycarbonate Science and Technology, Marcel Dekker New York 2000, S. 72ff." beschrieben.

Im Fall der Homopolycarbonate ist nur eine Dihydroxyarylverbindung eingesetzt, im Fall der Copolycarbonate sind mehrere Dihydroxyarylverbindungen eingesetzt.

Geeignete Kohlensäurederivate sind beispielsweise Phosgen oder Diphenylcarbonat.

Geeignete Kettenabbrecher, die bei der Herstellung der Polycarbonate eingesetzt werden können, sind sowohl Monophenole als auch Monocarbonsäuren. Geeignete Monophenole sind beispielsweise Phenol selbst, Alkylphenole wie Kresole, p-tert.-Butylphenol, Cumylphenol, p-n-Octylphenol, p-isoOctylphenol, p-n-Nonylphenol und p-iso-Nonylphenol, Halogenphenole wie p-Chlorphenol, 2,4-Dichlorphenol, p-Bromphenol und 2,4,6-Tribromphenol, 2,4,6-Triiodphenol, p-Jodphenol, sowie deren Mischungen.

Bevorzugte Kettenabbrecher sind ferner die Phenole, welche ein- oder mehrfach mit C₁- bis C₃₀-Alkylresten, linear oder verzweigt, bevorzugt unsubstituiert oder mit tert.-Butyl substituiert sind. Besonders bevorzugte Kettenabbrecher sind Phenol, Cumylphenol und/oder p-tert.-Butylphenol.

Geeignete Monocarbonsäuren sind weiterhin Benzoesäure, Alkylbenzoesäuren und Halogenbenzoesäuren.

Die Menge an einzusetzendem Kettenabbrecher beträgt bevorzugt 0,1 bis 5 Mol%, bezogen auf Mole an jeweils eingesetzten Dihydroxyarylverbindungen. Die Zugabe der Kettenabbrecher kann vor, während oder nach der Umsetzung mit einem Kohlesäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen. Weitere geeignete Verzweiger sind beispielsweise Phloroglucin, 4,6-Dimethyl-2,4,6-tri-(4-hydroxyphenyl)-hepten-2, 4,6-Dimethyl-2,4,6-tri(4-hydroxyphenyl)-heptan, 1,3,5-Tri(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenylisopropyl)-phenol, 2,6-Bis-(2-hydroxy-5'-methyl-benzyl)-4-methylphenol, 2-(4-hydroxyphenyl)-2-(2,4-dihydroxyphenyl)-propan, Hexa-(4(4-hydroxyphenylisopropyl)-phenyl)-orthoterephthalsäureester, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol sowie 2,4-Dihydroxybenzoesäure, Trimesinsäure, Cyanurchlorid und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2,00 Mol%, bezogen wiederum auf Mole an jeweils eingesetzten Dihydroxyarylverbindungen.

Die Verzweiger können entweder mit den Dihydroxyarylverbindungen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Dihydroxyarylverbindungen eingesetzt. Die aromatischen Polycarbonate sind bevorzugt nach dem Grenzflächenverfahren hergestellt.

Bevorzugt werden lineare Polycarbonate eingesetzt.

Die aromatischen Polycarbonate besitzen bevorzugt gewichtsmittlere Molekulargewichte Mw zwischen 10.000 und 50.000 g/mol, weiter bevorzugt zwischen 14.000 und 40.000 g/mol, noch weiter bevorzugt zwischen 15.000 und 35.000 g/mol, besonders bevorzugt zwischen 18.000 - 32.000 g/mol, ganz besonders bevorzugt zwischen 20.000 und 28.000 g/mol. Die Werte gelten für die Ermittlung durch Gelpermeationschromotographie, unter Verwendung von Dichlormethan als Elutionsmittel, Kalibrierung mit linearen Polycarbonaten (aus Bisphenol A und Phosgen) bekannter Molmassenverteilung der PSS Polymer Standards Service GmbH, Deutschland, Kalibrierung nach der Methode 2301-0257502-09D (aus dem Jahre 2009 in deutscher Sprache) der Currenta GmbH & Co. OHG, Leverkusen. Das Elutionsmittel ist auch beim Kalibrieren Dichlormethan. Säulenkombination aus vernetzten Styrol-Divinylbenzolharzen. Durchmesser der analytischen Säulen: 7,5 mm; Länge: 300 mm. Partikelgrößen des Säulenmaterials: 3 µm bis 20 µm. Konzentration der Lösungen: 0,2 Gew.-%. Flussrate: 1,0 ml/min, Temperatur der Lösungen: 30°C. Detektion mit Hilfe eines Brechungsindex(RI)-Detektors.

Der MVR-Wert des aromatisches Polycarbonats, gemessen nach ISO 1133:2012-03 bei 300 °C und 1,2 kg, beträgt bevorzugt 5 bis 35 cm³/(10 min), weiter bevorzugt 10 bis 20 cm³/(10 min).

Die MW- und MVR-Angaben beziehen sich auf die in der Zusammensetzung des thermoplastischen Polymers enthaltenen aromatischen Polycarbonate in ihrer Gesamtheit.

Besonders bevorzugte Polycarbonate sind das Homopolycarbonat auf Basis von Bisphenol A, das Homopolycarbonat auf Basis von 1,3-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5 -trimethylcyclohexan.

"Basiert auf" bedeutet, dass vorzugsweise mindestens 60 Gew.-%, weiter bevorzugt mindestens 70 Gew.-%, noch weiter bevorzugt mindestens 80 Gew.-% der Gesamtzusammensetzung des thermoplastischen Materials das entsprechende Polymer sind. Das thermoplastische Material umfasst neben einem oder mehreren der genannten Polymere bevorzugt weitere übliche Additive. Solche sind z.B. Flammschutzmittel, Antistatika, UV-Absorber, Stabilisatoren, Antioxidantien und Entformungsmittel. Geeignete Ultraviolett-Absorber sind Benzotriazole, Triazine, Benzophenone und/oder arylierte Cyanoacrylate. Als Stabilisatoren bevorzugt sind Phosphite und Phosphonite sowie Phosphine. Ferner können Alkylphosphate z. B. Mono-, Di- und Trihexylphosphat, Triisoctylphosphat und Trinonylphosphat eingesetzt werden. Als Antioxidantien können phenolische Antioxidantien wie alkylierte Monophenole, alkylierte Thioalkylphenole, Hydrochinone und alkylierte Hydrochinone eingesetzt werden. Geeignete Entformungsmittel sind zum Beispiel solche auf Basis eines Fettsäureesters, bevorzugt eines Stearinsäureesters, insbesondere bevorzugt auf Pentaerythritbasis. Bevorzugt werden Pentaerythrittetrastearat (PETS) und/oder Glycerinmonostearat (GMS) eingesetzt.

Besonders bevorzugt enthält die Zusammensetzung des thermoplastischen Polymers weniger als 0,1 Gew.-%, ganz besonders bevorzugt ist die Zusammensetzung des thermoplastischen Polymers frei von Streuadditiven, z.B. solchen auf Basis von Acrylat, Polyethylen, Polypropylen, Polystyrol, Glas, Aluminiumoxid und/oder Siliciumdioxid. Ferner enthält die Zusammensetzung des thermoplastischen Polymers besonders bevorzugt weniger als 0,1 Gew.-%, ganz besonders bevorzugt ist sie frei von Weißpigmenten o.ä. Pigmenten wie z.B. Titandioxid, Kaolin, Bariumsulfat, Zinksulfid, Aluminiumoxid, Aluminiumhydroxid, Quarzmehl, von Interferenzpigmenten und/oder Perlglanzpigmenten, d.h. plättchenförmigen Partikeln wie Glimmer, Graphit, Talk, SiO2, Kreide und/oder Titandioxid, beschichtet und/oder unbeschichtet.

Ferner enthält die Zusammensetzung des thermoplastischen Polymers besonders bevorzugt weniger als 0,1 Gew.-%, ganz besonders bevorzugt ist die Zusammensetzung des thermoplastischen Polymers frei von nanopartikulären Systemen wie Metallpartikeln, Metalloxidpartikeln. Bevorzugt enthält die Zusammensetzung des thermoplastischen Polymers auch weniger als 0,1 Gew.-%, besonders bevorzugt ist sie frei von Pigmenten auf Basis von unlöslichen Pigmenten, wie sie z.B. in DE 10057165 A1 und in WO 2007/135032 A2 beschrieben sind.

Das transparente Material kann mit Farbmitteln versetzt sein, um den Farbeindruck zu ändern. Bevorzugt ist das thermoplastische Material transparent eingefärbt, besonders bevorzugt transparent neutral-grau eingefärbt. Dieses hat den Vorteil, dass der Farbraum der hinter der transparenten Schicht liegenden Lichtquelle, welche Informationen transportiert und beispielsweise ein Display sein kann, erhalten bleibt. Solche neutral-grau eingefärbten Zusammensetzungen sind beispielsweise in der EP 2 652 029 A2 beschrieben, welche ein bevorzugtes Material für die transparente thermoplastische Schicht, insbesondere die Schicht a. oder die Schicht b., beschreibt. Entsprechende Polycarbonat-Zusammensetzungen enthalten ein Farbmittel oder eine Farbmittelkombination der Strukturen ausgewählt aus:
I. (1a) und/oder (1b) und (4) und (2a) und/oder (2b),
II. (1a) und/oder (1b) und (5) und (2a) und/oder(2b),
III. (1a) und/oder (1b) und (7),
IV. (1a) und/oder (1b) und (4) und (7),
V. (1a) und/oder (1b) und (5) und (7),
VI. (4) und (2a) und/oder (2b),
VII.(5) und (2a) und/oder (2b),
VIII. (2a) und/oder(2b) und (4) und (6),
IX. (2a) und/oder(2b) und (5) und (6),
X. (3) und (4),
XI. (3) und (5),
XII.(3) und (4) und (6),
XIII. (3) und (5) und (6),
XIV. (3) und (4) und (7),
XV. (3) und (5) und (7),
XVI. (3) und (4) und (2a) und/oder(2b),
XVII. (3) und (5) und (2a) und/oder(2b),
XVIII. (6) und (1a) und/oder (1b),
XIX. (6) und (1a) und/oder (1b) und (7),
XX. (1a) und/oder (1b) und (8),
XXI. (7) und (4),
XXII. (7) und (5),
XXIII. (1a) und/oder (1b),
XXIV. (2a) und/oder (2b),
XXV. (7),
XXVI. (2a) und/oder (2b) und (7),

wobei die Strukturen wie folgt sind: 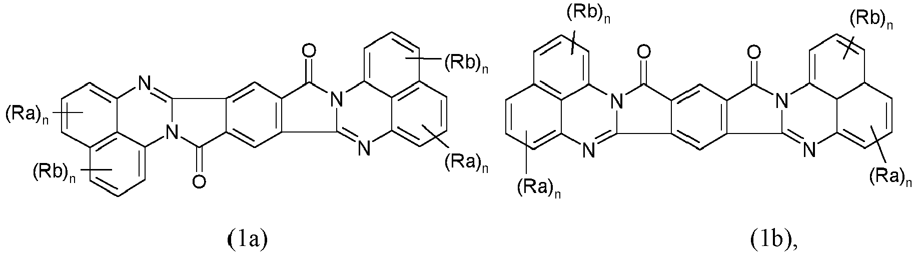
wobei
   - Ra und Rb unabhängig voneinander für einen linearen oder verzweigten Alkylrest oder Halogen stehen;
   - n unabhängig vom jeweiligen R für eine natürliche Zahl zwischen 0 und 3 steht, wobei der Rest für n = 0 Wasserstoff ist; 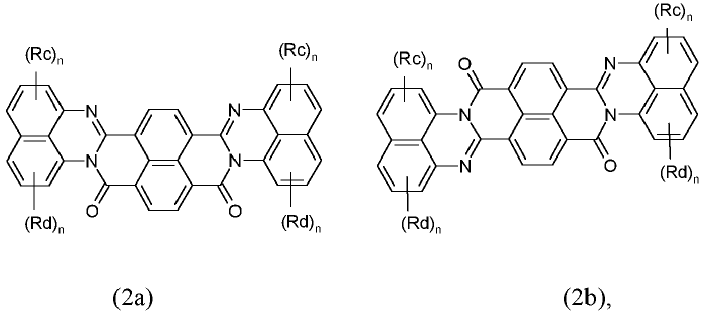
wobei
   - Rc und Rd unabhängig voneinander für einen linearen oder verzweigten Alkylrest oder Halogen stehen;
   - n unabhängig vom jeweiligen R für eine natürliche Zahl zwischen 0 und 3 steht, wobei der Rest für n = 0 Wasserstoff ist; 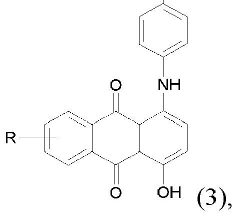
wobei
   R ausgewählt ist aus der Gruppe, die aus H und p-Methylphenlyamin-Rest besteht; 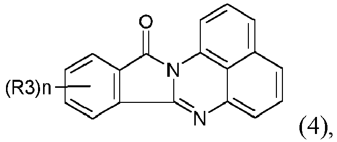
wobei
   R3 Halogen ist;
   n = 4 ist; 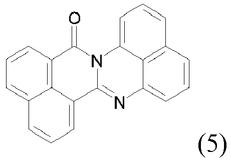 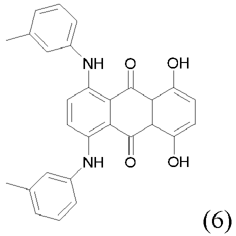 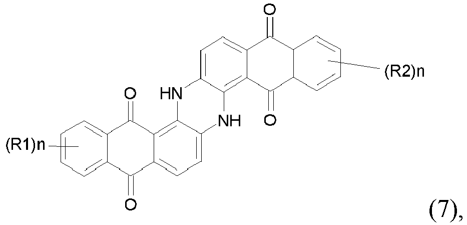
wobei
   - R1 und R2 unabhängig voneinander für einen linearen oder verzweigten Alkylrest oder Halogen stehen;
   - n für eine natürliche Zahl zwischen 0 und 4 steht; 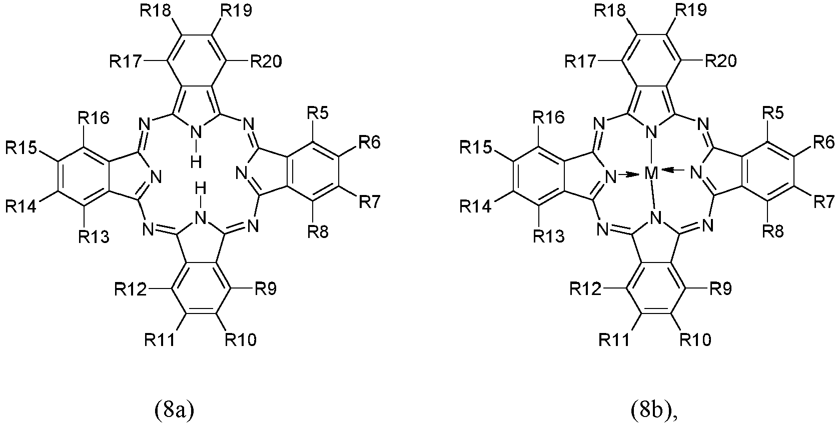
wobei
   - die Reste R(5-20) jeweils unabhängig voneinander Wasserstoff, Methyl, Ethyl, Propyl, Isopropyl, Butyl, Isobutyl, tert.-Butyl, Pentyl, Neopentyl, Hexyl, Thexyl, Fluor, Chlor, Brom, Sulfon oder CN sind und
   - M ausgewählt ist aus der Gruppe, die aus Aluminium, Nickel, Cobalt, Eisen, Zink, Kupfer und Mangan besteht,
   wobei die Farbmittel der Strukturen (1a), (1b), (2a), (2b), (3) und die Farbmittel der Strukturen (4), (5), (6), (7), (8a/b) in der thermoplastischen Polymer-Zusammensetzung, bezogen auf die jeweilige Einzelkomponente, in Mengen von 0,000001 Gew.-% bis 1,000000 Gew.-%, bezogen auf die Gesamtpolymerzusammensetzung, verwendet werden.

Unter die Bezeichnung "3D-Struktur" fallen Musterungen, Texturen und Narbungen, die eine gezielt in die Oberfläche eingebrachte, räumliche Anordnung und Verteilung einzelner Strukturelemente aufweisen, aus denen für einen Betrachter ein visueller Eindruck eines Optikdesigns entsteht. Dazu sind Strukturelemente enthalten, deren laterale Ausdehnung Dimensionen von bevorzugt mindestens 1 mm, weiter bevorzugt größer als 3 mm, besonders bevorzugt größer als 5 mm aufweisen. Außerdem weisen die Flächennormalen dieser Strukturelemente bevorzugt eine Winkelabweichung von > 10°, bevorzugt von > 20°, besonders bevorzugt > 30°, bezogen auf die Flächennormalen der angrenzenden Strukturelemente auf. Darüber hinaus liegt die Höhe der 3D-Strukturelemente bevorzugt im Bereich von 0,1 mm bis zur halben minimalen Dicke der Schicht a. im Bereich der 3D-Struktur. "Von"/"bis" schließt hierbei die genannte Unter- bzw. Obergrenze ein. Die Höhe der 3D-Struktur bezeichnet hierbei die Differenz zwischen dem höchsten und dem tiefsten Punkt der Struktur, was bezogen auf den Schichtaufbauquerschnitt die Differenz zwischen der minimalen und der maximalen Wanddicke entspricht.

Ein weiterer Aspekt der Erfindung ist eine Beleuchtungsanlage, beinhaltend mindestens:
i. einen erfindungsgemäßen Schichtaufbau,
ii. eine Lichtquelle ii., die so neben der Schicht a. angeordnet ist, dass ein seitliches Einstrahlen von Licht in die Stirnseite der Schicht a. möglich ist;
iii. gegebenenfalls ein Display, wobei das Display auf der Seite der Schicht b. des Schichtaufbaus angeordnet ist, wobei die Fläche des Displays bevorzugt parallel zu der Flächenausdehnung des Schichtaufbaus ausgerichtet ist, so dass der erfindungsgemäße Schichtaufbau durchleuchtet wird;
iv. gegebenenfalls eine Lichtquelle iv., wobei die Lichtquelle iv. auf der Seite der Schicht b. des Schichtaufbaus angeordnet ist;
v. gegebenenfalls einen Sensor, wobei der Sensor auf der Seite der Schicht b. des Schichtaufbaus angeordnet ist, wobei die Fläche des Sensors bevorzugt parallel zu der Flächenausdehnung des Schichtaufbaus ausgerichtet ist;
vi. gegebenenfalls einen Projektionsapparat, der in der Ebene der Oberfläche A' oder der Oberfläche B' oder der Oberfläche B, oder geometrisch zwischen A' und B eine Abbildungsebene hat, in der das vom Projektionsapparat projizierte Bild/Video scharf ist bzw. entsprechend eingestellt werden kann.

Die Lichtquelle ii. wird als Kantenlicht bezeichnet. Sie besteht bevorzugt aus einem länglich ausgedehnten LED-Modul oder LED-Streifen mit in Reihe angeordneten sog. Einzel-LEDs. Eine Einzel-LED kann z.B. eine Weißlicht-LED oder eine RGB-LED-Gruppe sein.

Die Lichtquelle iv. wird als Durchlicht bezeichnet. Sie besteht bevorzugt aus einem LED-Panel mit bevorzugt in einer Matrix angeordneten Einzel-LEDs. Eine Einzel-LED kann eine Weißlicht-LED oder eine RGB-LED-Gruppe sein. Zum Beispiel ist die Lichtquelle iv. ein ISELED LED Modul oder ein Passiv-Matrix-LED-Display. Die Lichtquelle iv. kann alternativ auch ein diffuses Flächenlicht sein, wie z.B. in der US 2004/0066645 A1 beschrieben.

Die Lichtquelle iv. kann alleine oder in Kombination mit einem Display iii. verwendet werden. Kombinationen verschiedener Hinterleuchtungselemente bestehend aus Displays und Lichtquellen, sind dabei denkbar.

Unter Stirnseite der Schicht a. wird die Seite der Dickenausdehnung der Schicht a. verstanden, die sich senkrecht zu der Flächenausdehnung der Schicht a. erstreckt, wie z.B. eine seitliche Kante.

Die Bereiche der seitlichen Kante, die für die Lichteinkopplung in Schicht a verwendet werden ermöglichen in einer bevorzugten Ausführungsform eine weitgehend senkrechte Durchstrahlung. Bei weitwinklig abstrahlenden Einzel-LEDs ist die Fläche bevorzugt konkav vor der LED, bei Einzel-LEDs mit Kollimationsoptik ist die ist die Fläche bevorzugt eben.

Der Schichtaufbau weist bevorzugt die folgenden Merkmale für die Bereiche auf, die vor einem Sensor, d.h. in seinem sog. direkten Sichtfeld liegen:
- Alle Schichten, insbesondere Schichten a., b. und c., sind in Summe nur schwach Licht streuend im sichtbaren Spektralbereich, gekennzeichnet durch einen Haze-Wert (Opazität, Trübung) nach ASTM D1003 von kleiner als 20%, bevorzugt kleiner als 15%, weiter bevorzugt kleiner als 10%.
- Die Gesamttransmission Ty des Schichtaufbaus beträgt im sichtbaren Spektrum mindestens 0%, bevorzugt mindestens 2%, mehr bevorzugt mindestens 10%, besonders bevorzugt mindestens 15%, besonders bevorzug in einem Bereich von 1 bis 50%, bestimmt nach DIN ISO 13468-2:2006 (D65, 10°).
- Alle Schichten, insbesondere Schichten a., b. und c., sind in Summe nur schwach Licht streuend im nahen Infrarot, gekennzeichnet durch eine Trübung, bestimmt durch Nah-Infrarot-Spektroskopie in Anlehnung an ASTM D1003, von kleiner als 5%, bevorzugt kleiner als 2%, mehr bevorzugt kleiner als 1%. Die Trübung ist definiert durch den Anteil diffuser Transmission an der totalen Transmission gemessen für jede Wellenlänge im Arbeitsbereich des Sensors.

Mit dem erfindungsgemäßen Schichtaufbau ist es erstmals möglich, Sensorelemente hinter 3D-Reliefstrukturen zu platzieren, weil es über den erfindungsgemäßen Schichtaufbau gelingt, Licht dieser Anzeige zu transmittieren, ohne dass Licht an den geometrischen 3D-Strukturen des Dekors so stark gebrochen, gebeugt oder gestreut wird, dass die Qualität des Sensorsystems bzgl. Auflösung, Signalstärke, Winkelpräzision, also Peilungswinkel oder Divergenzwinkel, Strahlqualität oder Cross-Talk maßgeblich verschlechtert wird.

Gleichzeitig kann mit dem erfindungsgemäßen Schichtaufbau durch seitliche Lichteinkopplung in die Schicht a. ein 3D-Dekor beleuchtet und damit für das Auge von vorne sichtbar gemacht werden. Durch Ausschalten der seitlichen Lichtquelle, wie LED-Kantenmodule, wird das 3D-Dekor wieder für das Auge unsichtbar gemacht.

Bevorzugte technische Lösungen für dekorative Licht-optische Effekte in denen der erfindungsgemäße Schichtaufbau als 3D-Dekor eingesetzt wird, sind:
(D1) Die 3D-Struktur wird als 3D-Dekor für das Auge bei aktiver Beleuchtung mittels Lichtquelle ii. sichtbar, weil es einen Anteil des auftreffenden Lichts von ihrer Oberfläche nach außen zurückstreut.
(D2) Die 3D-Struktur wird als 3D-Dekor für das Auge bei aktiver Beleuchtung mittels Lichtquelle ii. sichtbar, weil sie in Teilbereichen oder als ganze Fläche Licht nach außen zurückspiegelt oder -streut.
(D3) Die vordere Schicht a. dient als flächiger Lichtleiter für Licht, insbesondere Licht von Leuchtdioden (LED), das über eine oder mehrere Kanten oder mittels einer Einkoppeloptik über eine Oberfläche in den Lichtleiter eingekoppelt wird und in diesem durch totale interne Reflexion propagiert. Die 3D-Strukturen unterbrechen die lineare Ausbreitung des Lichts durch in den Lichtleiter hineinragende oder erweiternde schräge Flächen, die den Winkel der Lichtausbreitung lokal verändert und damit die totale interne Reflexion unterbrechen kann. Lichtanteile, die nicht mehr der totalen interne Reflexion unterliegen, treten nach außen und werden als dynamisches Dekorlicht wahrgenommen. Die Propagationsverluste durch die 3D-Struktur sind dennoch so gering, dass die Flächenlichtleitung gewährleistet ist und das 3D-Dekor die Funktion eines flächigen Dekorlichts übernimmt. Bei aktiver Beleuchtung nur aus einer Richtung (z.B. über eine Kante) ist der Kontrast der 3D-Struktur besonders hoch wegen der Schattenbildung, die durch flache Beleuchtung in Verbindung mit tiefen und dem Licht abgewandten Strukturen entsteht.
(D4) Die 3D-Struktur liegt zu 10 bis 100 %, bevorzugt zu 20 bis 90 %, mehr bevorzugt zu 30 bis 80 % über einem Anzeige-Element, bezogen auf die Außenfläche des Anzeige-Elements.
(D5) Die 3D-Struktur liegt mindestens partiell, bevorzugt zu 20 bis 90 %, mehr bevorzugt zu 30 bis 80 % über einem Anzeige-Element, bezogen auf die Außenfläche des Anzeige-Elements und erstreckt sich über dieses hinaus.
(D6) Fade-out: Die 3D-Struktur hat einen Fade-out Effekt, bevorzugt im Bereich des Anzeige-Elements, der z.B. durch Abnahme in der Dekortiefe oder seiner Flächenanteile realisiert werden kann. Mit Fade-out Effekt ist gemeint, dass die 3D-Struktur im Anzeigebereich des Anzeige-Elements optisch fließend und nicht scharf in eine plane Fläche übergeht, wobei die Elemente der 3D-Struktur in ihrer Anzahl und/oder relativen Flächenbelegung und/oder Strukturtiefe kontinuierlich abnehmen, beginnend im Bereich außerhalb des Anzeige-Elements und endend im Anzeigebereich des Anzeige-Elements.
(D7) Black Panel: Die 3D-Struktur wird für das Auge bei ausgeschalteter Lichtquelle ii. und ausgeschaltetem Display nicht mehr erkennbar, wobei das Kontrastverhältnis im Bereich der 3D-Struktur bei guten ambienten Lichtbedingungen (60 bis 120 cd/m² Leuchtdichte, homogene Ausleuchtung, ohne Blendung) kleiner als 2,5 : 1 ist. Man erhält einen Black-Panel-Effekt, falls für Schicht c. eine stark absorbierende Black Panel Folie gewählt wird, die durch eine Lichttransmission von 10 bis 50%, bevorzugt von 15 bis 35%, mehr bevorzugt von 20 bis 25% gekennzeichnet ist.
(D8) Lichtmischung: Überlappen Dekorlicht und Licht des Displays bzw. Lichtquelle iv., so findet eine Lichtmischung statt, mit additiver Farbmischung und mit Intensitätsanstieg im Überlappbereich. Der Anwender muss je nach Anwendungsfall und technischer Ausführung / technischem Betriebszustand der Lichtquellen und Anzeigen entscheiden, ob Licht- und Anzeigespezifikationen trotz der unumgänglichen additiven Lichtmischung noch erfüllt sind.

Das Kontrastverhältnis ist definiert durch Lmax / Lmin, mit Lmax = maximale Leuchtdichte in der 3D-Struktur und Lmin = minimale Leuchtdichte in den dunkelsten Bereichen der 3D-Struktur.

Der erfindungsgemäße Schichtaufbau ermöglicht in Kombination mit Leucht- und Anzeigeelementen insgesamt mindestens vier individuelle Betriebszustände:
1. Kantenbeleuchtung an, so dass die 3D-Struktur sichtbar wird und Display an, so dass auch die Anzeige sichtbar wird, auch im Dekorbereich;
2. Kantenbeleuchtung aus, so dass die 3D-Struktur unsichtbar bleibt und Display aus, so dass die Anzeige nicht sichtbar ist, auch nicht im Dekorbereich;
3. Kantenbeleuchtung an, so dass die 3D-Struktur sichtbar wird und Display aus, so dass die Anzeige nicht sichtbar ist, auch nicht im Dekorbereich;
4. Kantenbeleuchtung aus, so dass die 3D-Struktur unsichtbar bleibt und Display an, so dass die Anzeige sichtbar ist, auch im Dekorbereich.

Der erfindungsgemäße Schichtaufbau wird bevorzugt mit Elementen ausgewählt aus der Gruppe bestehend aus einer oder mehreren Display-Anzeigen, mit einer oder mehreren Kantenbeleuchtungen und mit einem oder mehreren Durchlicht-Einheiten oder einer Kombination aus mindestens zwei hiervon.

Der erfindungsgemäße Schichtaufbau wird bevorzugt als Display-Abdeckung verwendet.

Der erfindungsgemäße Schichtaufbau wird alternativ oder zusätzlich bevorzugt als Sensorabdeckung verwendet. Bevorzugte Sensoren sind ausgewählt aus der Gruppe bestehend aus Innenraumkameras, Innenraum-LiDARe, RADARe, Infrarot-Kameras, High Dynamic Range Kameras oder einer Kombination aus mindestens zwei hiervon.

Der erfindungsgemäße Schichtaufbau wird bevorzugt als Antennenabdeckung verwendet. Antennen sind beispielsweise 5G-Antennen.

Bevorzugt weist der erfindungsgemäße Schichtaufbau mindestens eine, bevorzugt zwei, mehr bevorzugt drei, noch mehr bevorzugt vier, besonders bevorzugt alle der folgenden Schichten oder Beschichtungen auf, ausgewählt aus:
- Der Schichtaufbau weist zusätzlich eine vorderseitige Schutzschicht auf, z.B. einen kratzbeständigen Lack oder einen Schutzlack gegen chemisch aggressive Medien;
- Der Schichtaufbau weist zusätzlich eine rückseitige Schicht auf, z.B. ausgeführt als transparente Elektrode oder als transparente leitfähig beschichtete Folie, um dem Verbund eine Touch Funktion hinzuzufügen;
- Der Schichtaufbau weist auf der Sichtseite eine zusätzliche Anti-Reflex und/oder Anti-Fingerprint Schicht auf;
- Der Schichtaufbau weist auf der Sichtseite eine zusätzliche Niedrig-Reflex-Schicht auf;
- Der Schichtaufbau weist auf der Sichtseite eine zusätzliche Anti-Fingerprint-Schicht auf.

In einer bevorzugten Ausführungsform der Beleuchtungsanlage bildet die Beleuchtungsanlage einen Teil der Karosserie eines Fahrzeugs, welcher zur Kommunikation mit Personen dient. Bevorzugt ist der Teil der Karosserie ausgewählt aus der Gruppe bestehend aus einem Kühlergrill, einer Stoßstange, einem Frontgrill, Dachmodul, Sensorbox, Stoßfänger, Funktionsleuchte, Heckleuchte, Scheinwerfer und allen anderen Leuchten für Fahrzeug-Außenanwendungen, oder einer Kombination aus mindestens zwei davon.

In einer bevorzugten Ausführungsform der Beleuchtungsanlage deckt die Beleuchtungsanlage einen Teil der Fahrzeug-Innenraum-Oberfläche ab, um ein HMI oder eine ambiente Beleuchtung abzubilden.

In einer bevorzugten Ausführungsform der Beleuchtungsanlage handelt es sich bei der Lichtquelle ii. um eine LED-Kantenbeleuchtung. Diese wurde zuvor im Zusammenhang mit dem erfindungsgemäßen Schichtaufbau beschrieben.

In einer bevorzugten Ausführungsform der Beleuchtungsanlage ist der Sensor v. ausgewählt aus der Gruppe bestehend aus Innenraumkameras, Innenraum-LiDARe, RADARe, Infrarot-Kameras, High Dynamic Range Kameras oder einer Kombination aus mindestens zwei hiervon.

Die Erfindung wird in den Figuren
- Figur 1:: Schematischer Aufbau für eine LiDAR-Abdeckung nach dem Stand der Technik
- Figur 2:: Beispiel für einen erfindungsgemäßen Schichtaufbau
- Figur 3:: Beispiel für einen erfindungsgemäßen Schichtaufbau
- Figur 4:: Beispiel für eine erfindungsgemäße Kantenbeleuchtung mit einem erfindungsgemäßen Schichtaufbau und dahinterliegendem Sensor mit angedeutetem Sichtfeld
- Figur 5:: Beispiel für einen erfindungsgemäßen Beleuchtungsanlage mit einem erfindungsgemäßen Schichtaufbau
- Figur 6:: Beispiel für unterschiedliche Zustände der erfindungsgemäßen Beleuchtungsanlage aus Figur 5
näher beschrieben, wobei die Figuren nicht maßstabsgetreu sein müssen. Die Figuren sollen nicht als einschränkend hinsichtlich der erfinderischen Breite verstanden werden.

Figur 1 zeigt einen Schichtaufbau 100 in Form einer LiDAR-Sensorabdeckung 100 nach dem Stand der Technik. Die LiDAR-Abdeckung 100 umfasst einen Mehrschichtkörper bestehend aus einer Substratschicht 130, umfassend eine thermoplastische Zusammensetzung auf Basis von Polycarbonat, eine vorderseitige Schutzschicht 110, z.B. eine Decklackschicht, und einen Primer 120 für die Decklackschicht.

Figur 2 zeigt einen schematischen Aufbau eines erfindungsgemäßen Schichtaufbaus 200. Hierbei ist eine zickzack-förmige Schicht c. 206, in Form einer Polycarbonatschicht zwischen zwei Polycarbonatschichten angeordnet, die die Schichten a. 202 und Schicht b. 204 darstellen. Die Schicht a. 202 weist in Richtung der Vorderseite oder Sichtseite 201 des Schichtaufbaus 200 und ist damit zu einem potentiellen Betrachter ausgerichtet. Die Schicht b. 204 weist in Richtung Innenseite 203 einer Beleuchtungsanlage in die der Schichtaufbau 200 eingebaut sein kann. Die Schicht a. 202 bildet eine äußere Oberfläche A 210 und eine zu der Oberfläche A 210 angewinkelte Oberfläche A' 220. Die Schicht b. 204 bildet eine äußere Oberfläche B 240 und eine zu der Oberfläche B 240 angewinkelte Oberfläche B' 230. Die Oberflächen A 210 und B 240 sind parallel zueinander angeordnet. Zwischen der Schicht a. 202 und Schicht b. 204 ist in angewinkelter Form die Schicht c. 206 angeordnet. Die Schicht c. 206 folgt dabei der Kontur die durch die Oberflächen A' 220 und B' 230 gebildet werden und bildet eine 3D-Struktur 250, in dem Schichtaufbau 200.

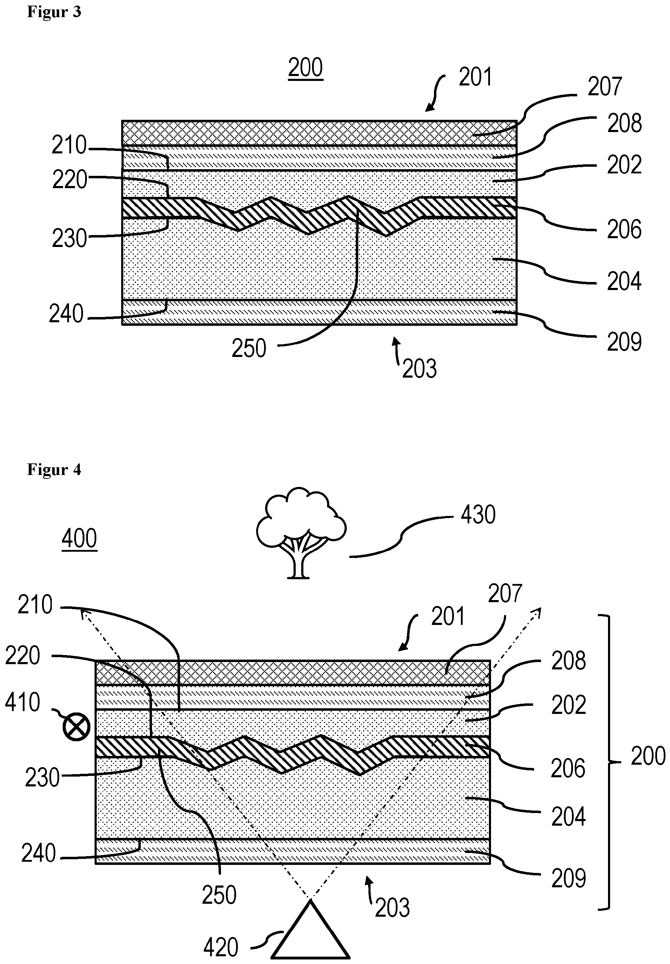

Figur 3 zeigt einen schematischen Aufbau eines erfindungsgemäßen Schichtaufbaus 200 wie er in Figur 2 dargestellt ist mit dem Zusatz, dass auf der Schicht a. 202 als auch auf der Schicht b. 204 jeweils eine weitere Schicht 208 oder 209 angebracht ist. Bei der Schicht 208 handelt es sich um eine Schutzschicht, die den Schichtaufbau 200 gegen Verkratzen oder gegen Chemikalieneinfluss schützt. Bei der Schicht 209 handelt es sich entweder um eine Schutzschicht, die den Schichtaufbau 200 gegen Verkratzen oder gegen Chemikalieneinfluss schützt oder um eine transparente Elektrode für Touch Funktion. Weiterhin kann auf mindestens einer Seite des Schichtaufbaus 200 alternativ oder zusätzlich zu den Schichten 208 oder 209 eine Schicht 207 angebracht sein. Bei der Schicht 207 handelt es sich um eine oder mehrere ausgewählt aus der Gruppe bestehend aus einer Antireflexschicht, einer Low-Reflex und einer Anti-Fingerprint oder eine Kombination aus mindestens zwei hieraus. In der Figur 3 ist nur die Variante gezeigt, dass auf der Vorderseite, also der Seite an der sich die Schicht a. befindet, die zusätzliche Schicht 207 angeordnet ist. Es ist jedoch möglich jegliche Kombinationen der Schicht 207, 208 und 209 vorzunehmen.

Figur 4 zeigt eine Beleuchtungsanlage 400, die einen erfindungsgemäßen Schichtaufbau 200 aufweist, wie er in Figur 3 beschrieben wurde. Die Beleuchtungsanlage 400 weist neben dem erfindungsgemäßen Schichtaufbau 200 mindestens eine LED-Kantenbeleuchtung 410 auf, die Licht in die Schicht 202 einkoppelt. Die 3D-Struktur 200 liegt im Sichtfeld eines Sensors 420. Das Objekt 430, das im Sichtfeld des Sensors liegt, kann von dem Sensor 420 durch den Schichtaufbau 200 hindurch detektiert werden.

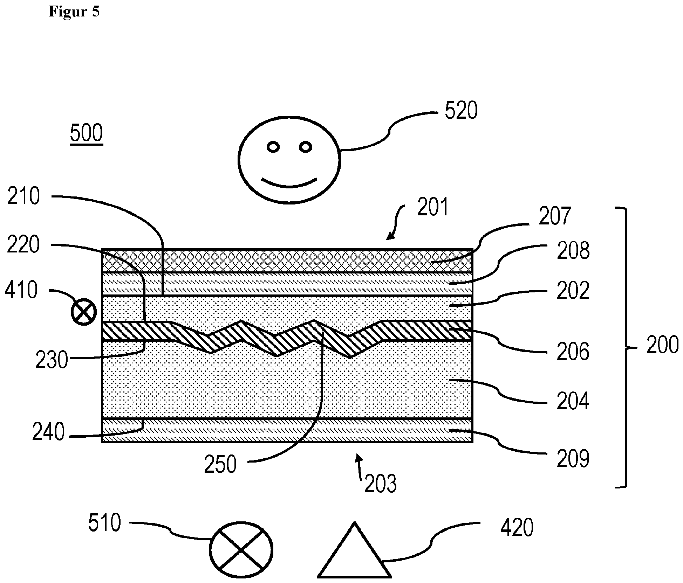

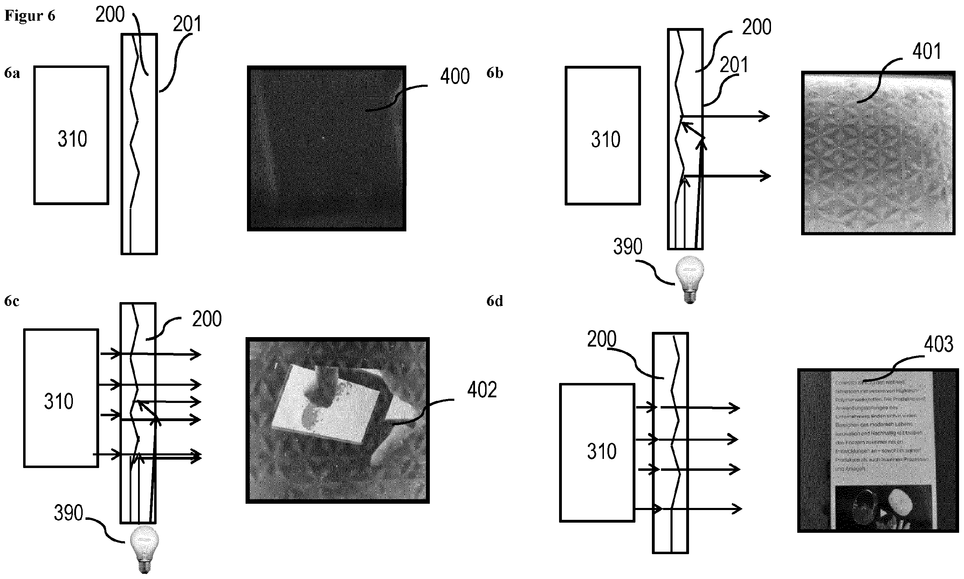

Figur 5 zeigt eine Beleuchtungsanlage 500, die einen erfindungsgemäßen Schichtaufbau 200 aufweist, wie er in Figur 3 beschrieben wurde. Die Beleuchtungsanlage 500 weist neben dem erfindungsgemäßen Schichtaufbau 200 mindestens eine Lichtquelle 510 und/oder einen Sensor 420 auf sowie mindestens eine LED-Kantenbeleuchtung 410, die Licht in die Schicht 202 einkoppelt. Ein Betrachter 520 des Schichtaufbaus 200 kann die unterschiedlichen Zustände, wie sie in Figur 6 gezeigt sind von der Vorderseite 201 des Schichtaufbaus 200 betrachten.

Figur 6 zeigt vier Beispiele für unterschiedliche Zustände der erfindungsgemäßen Beleuchtungsanlage 500 aus Figur 5, dargestellt an ein und demselben erfindungsgemäßen Schichtaufbau 200, aufgebaut und hergestellt gemäß Beispiel 2. Jeweils sind links schematisch der seitliche Querschnitt eines Displays 310 und rechts eine Fotografie 400 dessen gezeigt, was ein Betrachter auf der Vorderseite oder Sichtseite 201 sehen würde. Im Zustand 6a ist das Display 310 ausgeschaltet und die Kanten-LED 390 ausgeschaltet. Das Foto 400 zeigt eine dunkle Fläche, d.h. den Black Panel Effekt. Im Zustand 6b ist das Display 310 ausgeschaltet und die Kanten-LED 390 (hier schematisch als Glühbirne abgebildet) eingeschaltet. Das Foto 401 zeigt eine 3D-Dekorfläche, in der die 3D-Struktur 250 für das Auge des Betrachters sichtbar gemacht wurde. Im Zustand 6c ist das Display 310 eingeschaltet und die Kanten-LED 390 eingeschaltet. Das Foto 402 zeigt eine 3D-Dekorfläche mit sichtbar gemachter 3D-Struktur 250, die vom Licht des Display 310 durchleuchtet wird und daher an den vom Display 310 durchleuchteten Stellen im Bildbereich überstrahlt wird. Das Bild des Displays 310 erscheint verzerrungsfrei. Im Zustand 6d ist das Display 310 eingeschaltet und die Kanten-LED 390 ausgeschaltet. Das Foto 403 zeigt eine dunkle Fläche (Black Panel Effekt), die nur im Bildbereich des Displays 310 überstrahlt wird. Das Bild des Displays 310 erscheint verzerrungsfrei, ohne dass die 3D-Struktur 250 zu erkennen ist.

### Beispiele

Die Erfindung wird anhand der nachfolgenden Beispiele näher erläutert, ohne jedoch darauf beschränkt zu sein.

### Beispiel 1: Schaltbarer Black Panel Effekt

### Eingesetzte Materialien

Für die Schicht a. und die Schicht b. wurde verwendet: Transparentes Makrolon^{®} Ai der Covestro Deutschland AG: aromatisches Polycarbonat auf Basis von Bisphenol A mit einer MVR von 19 cm³/(10 min), bestimmt bei 300 °C und 1,2 kg gemäß DIN ISO 1133:2012-03, enthaltend UV-Absorber und Entformer. Ty, gemessen bei einer Dicke von 2 mm gemäß ISO 13468-2:2006 (D65, 10°): 88,07 %. Trübung, bestimmt nach ASTM D1003:2013 bei einer Schichtdicke von 2 mm: 0,68 %. Das Polycarbonat lag als Granulat für den Spritzguss vor. Zur Vorbehandlung wurde das Polycarbonat für 4 Stunden bei 120 °C in Trockenluft getrocknet. Das Polycarbonat hat einen Brechungsindex von 1,585 nach ISO 489 (Methode A).

Für die Zwischenschicht c. wurde verwendet: Makrofol^{®} LM 296 1-2 760125 der Covestro Deutschland AG: grau eingefärbte Extrusionsfolie auf Basis des Polycarbonats Makrolon^{®}. Die Extrusionsfolie hat einen Brechungsindex von 1,596 nach ISO 489 (Methode A). Die Folien wurden jeweils auf die Maße 200 mm × 150 mm bei einer Dicke von 0,5 mm zugeschnitten. Sie besaßen eine glänzende Oberfläche auf der 1er Seite und eine sehr fein mattierte Oberfläche auf ihrer 2er Seite.

Zur Herstellung der 3D-Struktur wurde ein metallischer Platten-Werkzeugeinsatz bereitgestellt mit einer 3D-Struktur, wie in Abbildung B1.1 zu sehen. Abbildung B1.2 weist typische Strukturgrößen der Einzelelemente von 7 bis 16 mm und eine Höhe der 3D-Strukturelemente von 0,49 mm auf. Daraus resultieren Winkel zwischen der Strukturflächennormale und der planen und glatten zweiten Wand der Spritzgussform von 3,35°. Damit ist diese Struktur geeignet, um erfindungsgemäße Schichtstrukturen herzustellen und einen experimentellen Nachweis der gewünschten Effekte bei erfindungsgemäßen Schichtstrukturen zu ermöglichen.

### Abbildung B1.1: 3D-Modell einer Struktur mit pyramidalen Elementen unterschiedlicher

Verteilung auf einer Platte mit dem Flächenmaßen 200 mm × 150 mm.

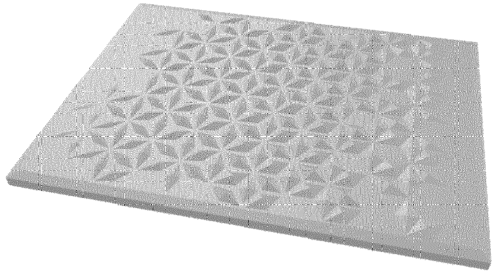

### Abbildung B1.2: Maße der pyramidalen Elemente [mm]. Oben: Seitenansicht. Unten: Draufsicht.

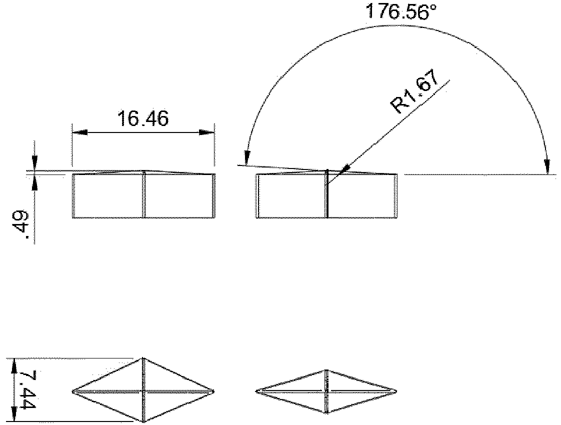

Für die Versuche wurden Spritzguss-Musterplatten mit rückseitiger 3D-Struktur und den Maßen 200 mm × 150 mm × 3 mm aus Polycarbonat-Zusammensetzungen hergestellt.

Die Lichttransmission der Makrofol^{®} Folie betrug vor der Verarbeitung 25% nach DIN ISO 13468-2:2006 (D65, 10°). Damit ist sie als Black Panel Folie zu verwenden.

### Herstellung der Formkörper in Form von Schichtaufbauten

Auf einer HM270 Spritzgießmaschine der Wittmann Battenfeld GmbH wurde ein mehrschichtiges Formteil mit den Maßen 200 mm × 150 mm × 6 mm hergestellt.

Dazu wurde in einem ersten Schritt jeweils eine Makrofol^{®} Folie als Schicht c., aus dem zuvor erwähnten Material, in diejenige Werkzeughälfte eines Stahlwerkzeugs mit den Forminnenmaßen 200 mm × 150 mm × 3 mm eingelegt, deren Oberfläche mit der oben beschriebenen und in Abbildung B1.1 gezeigten 3D-Struktur versehen war. Die andere Werkzeughälfte besaß eine hochglänzende Oberfläche. Nach dem Schließen des Werkzeugs wurde das bei 305 °C aufgeschmolzene transparente Polycarbonat-Material mit einem maximalen spezifischen Einspritzdruck von ca. 2000 bar in das Werkzeug eingespritzt, um die Schicht a. zu bilden. Die Folie der Schicht c. wurde bei diesem Überspritzen jeweils in die Struktur der Werkzeugoberfläche gedrückt. Welche Oberflächenseite, also die glatte 1er-Seite oder die raue 2er-Seite zur Struktur eingelegt wurde, war dabei unerheblich. Die Temperatur der Werkzeugwand lag auf beiden Seiten, also sowohl auf der Auswerferseite sowie auch auf der gegenüberliegenden Einspritzseite bei 90 °C. Die Einspritzzeit betrug etwa 2,5 Sekunden. Nach einer Nachdruckzeit von 15 Sekunden (spezifischer Nachdruck: 850 bar) und einer Kühlzeit von 20 Sekunden wurde das Werkzeug geöffnet und das Formteil entnommen. Die Makrolon-Schicht bildet die Schicht a.; die Makrofol-Folie die Schicht c, im Folgenden als Polycarbonatplatte bezeichnet.

Anschließend wurde das Spritzgießwerkzeug auf die Forminnenmaße 200 mm × 150 mm × 6 mm umgebaut und die strukturierte Stahloberfläche entfernt, sodass jetzt beide Werkzeughälften eine hochglänzende Oberfläche besaßen. Die Polycarbonatplatte wurde mit der 3D strukturierten Seite bei 90 °C für 15 Minuten in einem Wärmeschrank vortemperiert. Daraufhin wurde diese Platte wieder in die erste Werkzeughälfte des Stahlwerkzeugs mit den Forminnenmaßen 200 × 150 × 6 mm eingelegt, die strukturierte Oberfläche mit der jeweiligen Folie zur zweiten Werkzeughälfte zeigend. Nach dem Schließen des Werkzeugs wurde das bei 305 °C aufgeschmolzene transparente Polycarbonat-Material mit einem maximalen spezifischen Einspritzdruck von ca. 2000 bar in das Werkzeug auf die Polycarbonatplatte, auf die Seite mit der 3D strukturierten Folie eingespritzt. Die Temperatur der Werkzeugwand lag auf der Auswerferseite bei 100 °C, auf der gegenüberliegenden Einspritzseite bei 80 °C. Die Einspritzzeit betrug erneut 2,5 Sekunden. Nach einer Nachdruckzeit von 15 Sekunden (spezifischer Nachdruck: 800 bar) und einer Kühlzeit von 30 Sekunden wurde das Werkzeug geöffnet und das fertige Formteil mit einer Gesamtdicke von etwa 6 mm und zwei hochglänzenden Seiten entnommen. Der erhaltene Schichtaufbau hat nun eine weitere Schicht b., und weist den erfindungsgemäßen dreilagigen Schichtenaufbau auf mit innenliegender 3D Struktur in Form der strukturierten "Black-Panel-Folie".

Die Lichttransmission des erhaltenen Schichtaufbaus lag bei 21% nach DIN ISO 13468-2:2006 (D65, 10°).

### Nachweis der verschiedenen optischen Effekte

Bei normalem Raumlicht (Deckenlicht) und Blick auf die Schicht a. erscheint die Schicht sowie der gesamte Schichtaufbau gleichmäßig in dunklem anthrazit, ohne dass ein Dekor zu erkennen ist. Für die Sichtbarmachung des Dekors wurde der Formkörper in eine Lichtbox eingespannt, welche für die Aufnahme von Platten mit den Maßen 200 mm × 150 mm gefertigt wurde. Diese Lichtbox besaß einen rund um die Platte auf Höhe der Kanten laufenden LED-Streifen für die Kantenbeleuchtung 410 sowie etwas Platz auf der Rückseite, um eine Lichtquelle 510 und alternativ einen Sensor 420 anzubringen, wie dies schematisch in Figur 5 gezeigt ist. Kantenbeleuchtung 410 und Hinterleuchtung 510 können dabei sowohl separat als auch kombiniert betrieben werden. Wird die Beleuchtung über die Kanten aktiviert, wird die 3D-Struktur als Dekorlicht mit dem Auge sichtbar. Der Übergang von unsichtbarem Dekor in schwarzer Fläche auf sichtbares Dekor heißt schaltbarer Black Panel Effekt. Wird die Lichtquelle 510 eingeschaltet, wird der Lichtstrahl verzerrungsfrei durch den Formkörper oder Schichtaufbau 200 durchgelassen und tritt vorne für den Betrachter 520 sichtbar aus. Die Hinterleuchtung des Dekors ist eine zweite Lichtfunktion des Formkörpers 200.

Nachweis der Sensortransparenz: Der Laserstrahl eines LiDAR-Sensors wurde von hinten durch den Formkörper 200 geschickt und als durch die Vorderseite eingehendes Signal detektiert. Verwendet wurde ein 3D - Real Time LiDAR vom Typ VLP-16 Puck mit 903 nm Laser vom Hersteller Velodyne LiDAR, Inc. Der Schichtaufbau 200 wurde innerhalb des Sichtfelds des Sensors senkrecht zur Durchstrahlungsrichtung im Abstand 0,5 m platziert. Als Detektionsobjekt wurde ein beliebiger Metallstab im Abstand zum LiDAR von 3 bis 10 m verwendet. Die mittlere Signalstärke wurde elektronisch ausgelesen. Danach wurde für eine Referenzmessung der Schichtaufbau aus dem Sichtfeld entfernt und wiederum das Signal ausgelesen. Die Effizienz, d.h. der Prozentsatz der gemessenen Signalstärken mit im Vergleich zu den Signalstärken ohne Prüfkörper, lag bei 68 bis 73%. Das Punktbild des Objekts war klar und verzerrungsfrei zu erkennen. Beides zusammen ist der experimentelle Nachweis für die Sensortransparenz des Formkörpers.

Die optischen Effekte werden durch die Bilder aus Figur 5 veranschaulicht.

### Beispiel 2: Schaltbarer Black Panel Effekt, höhere Transmission

Schicht a. und b. enthielten Makrolon^{®} wie in Beispiel 1, jedoch wurde für die Zwischenschicht c. verwendet: Makrofol^{®} LM 296 1-2 der Covestro Deutschland AG: grau eingefärbte Extrusionsfolie auf Basis des Polycarbonats Makrolon^{®} und einer Lichttransmission gemäß DIN ISO 13468-2:2006 (D65, 10°) von 50%. Die Extrusionsfolie hat einen Brechungsindex von 1,59 nach ISO 489 (Methode A).

Alle optischen Effekte, wie oben zu Beispiel 1 beschreiben, ließen sich auch mit diesem erfindungsgemäßen Schichtaufbau darstellen. Im Vergleich zu Beispiel 1 erscheint die Hinterleuchtung für den vorne platzierten Beobachter heller, während die 3D-Struktur bei aktivierter Kantenbeleuchung und deaktivierter Hinterleuchtung subjektiv etwas kontrastärmer wirkt. Daraus lässt sich schlussfolgern: Je größer die Absorption der Schicht c. ist (also je mehr Farbstoffe in der Folie sind), desto besser zeichnet sich die 3D-Struktur bei der Kantenbeleuchtung ab.

Die relative LiDAR-Signalstärke lag bei 68 bis 73%, wie in Beispiel 1 berechnet.

### Beispiel 3: Schaltbarer Black Panel Effekt

Schicht a. und b. enthielten Makrolon^{®} wie in Beispiel 2, jedoch wurde für die Zwischenschicht c. verwendet: Makrofol^{®} LM 296 1-2 der Covestro Deutschland AG: grau eingefärbte Extrusionsfolie auf Basis des Polycarbonats Makrolon^{®} und einer Transmission gemäß DIN ISO 13468-2:2006 (D65, 10°) von 75%. Die Folie hat einen Brechungsindex von 1,59 nach ISO 489 (Methode A).

Die optischen Effekte ließen sich mit diesem Schichtaufbau zu einem wesentlichen Teil erreichen. Im Vergleich zu Beispiel 2 ist das Display-Bild nochmals heller, das 3D-Dekor subjektiv nochmals kontrastärmer und die 3D-Struktur zeichnet sich im Ambientelicht (z.B. Büroraum mit indirektem Deckenlicht) leicht ab. Dennoch konnte das Display durch die 3D-Struktur gelesen werden egal, ob das Kantenlicht eingeschaltet war oder nicht. Die 3D-Struktur war bei eingeschalteten Kantenlicht gut sichtbar.

Die Effizienz, d.h. das Verhältnis der gemessenen Signalstärken mit und ohne Prüfkörper, lag bei guten 73 bis 77%.

### Beispiel 4: Schaltbarer Black Panel Effekt kombiniert mit Sensor-Transparenz

Schicht a. und b. enthielten Makrolon^{®} wie in Beispiel 1, jedoch wurde für die Zwischenschicht c. verwendet: Makrofol^{®} ST352 1-1 der Covestro Deutschland AG: schwarz eingefärbte 375 µm dicke Extrusionsfolie auf Basis des Polycarbonats Makrolon^{®} und einer Lichttransmission im Sichtbaren gemäß DIN ISO 13468-2:2006 (D65, 10°) von 5% und im Infraroten (bestimmt bei der Wellenlänge 905 nm) von 89%. Die Extrusionsfolie hat einen Brechungsindex von 1,59 nach ISO 489 (Methode A).

Der Black Panel Effekt mit Dekorlicht-Effekt wie für Beispiel 1 beschrieben lässt sich auch mit diesem Schichtaufbau darstellen.

Zusätzlich lässt sich der Schichtaufbau als abbildungsgenaue hoch-transparente Abdeckung für einen LiDAR-Sensor besonders gut verwenden. Verwendet wurde ein LiDAR mit Aufbau gem. Bsp 1.

Die Effizienz, d.h. das Verhältnis der gemessenen Signalstärken mit und ohne Prüfkörper, lag bei guten 73 bis 77%. Das Punktbild des Objekts war klar und verzerrungsfrei zu erkennen. Die eingefärbte Folie Makrofol^{®} ST352 1-1 ist bekannt durch eine geringe Streuung. Gleiches gilt für das verwendete Makrolon^{®}.

### Messwertetabelle:

| | Δn b. und c. | Δn a. und b. | T c. | HWW c. | A (903 nm) | D (903 nm) |
|---|---|---|---|---|---|---|
| Beispiel 1 | < 0,005 | < 0,005 | 20% | (nicht streuend) | <5% | <5% |
| Beispiel 2 | < 0,005 | < 0,005 | 50% | (nicht streuend) | <5% | <5% |
| Beispiel 3 | < 0,005 | < 0,005 | 75% | (nicht streuend) | <3% | <5% |
| Beispiel 4 | < 0,005 | < 0,005 | 3-5% | (nicht streuend) | <3% | <3% |

| | | | | | | |
|---|---|---|---|---|---|---|
| Legende: Δn = Brechungsindexunterschied zwischen zwei Schichten; T = Transmission im Sichtbaren; HWW = Halbwertswinkel bzw. Streubreite ("nicht streuend" bedeutet, dass ein HWW nicht bestimmbar ist, da kein oder kaum Streulicht vorhanden); A = Absorption bei der Laserwellenlänge; D = Diffusion bzw. Trübung bei der Laserwellenlänge | | | | | | |

## Patentansprüche

1. Ein Schichtaufbau, beinhaltend:
(A1) eine erste Schicht a. mit einer ersten planen Oberfläche A und einer der ersten Oberfläche A gegenüberliegenden, zumindest über einen Teilbereich gegenüber der ersten Oberfläche A angewinkelt angeordneten Oberfläche A', wobei die Schicht a. ein transparentes Material aufweist, vorzugsweise Glas oder ein thermoplastisches Polymer, bevorzugt ausgewählt aus der Gruppe bestehend aus einem Polycarbonat, einem Copolycarbonat, Polyestercarbonat, PMMA, PET, einem Polyurethan, einem thermoplastischen Polyurethan oder einer Mischung aus mindestens zwei hiervon;
(A2) eine weitere Schicht b. mit einer ersten planen Oberfläche B und einer der ersten Oberfläche B gegenüberliegenden, zumindest über einen Teilbereich gegenüber der ersten Oberfläche B angewinkelt angeordneten Oberfläche B', wobei die Schicht b. ein transparentes Material aufweist, vorzugsweise Glas oder ein thermoplastisches Polymer, bevorzugt ausgewählt aus der Gruppe bestehend aus einem Polycarbonat, einem Copolycarbonat, Polyestercarbonat, PMMA, PET, einem Polyurethan, einem thermoplastischen Polyurethan oder einer Mischung aus mindestens zwei hiervon;
wobei die Schichten a. und b. so zu einander angeordnet sind, dass die planen Oberflächen A und B parallel zueinander verlaufen und die angewinkelt angeordneten Oberflächen A' und B' einander zugewandt sind und einen einander entsprechenden Verlauf der Winkelung unter Ausbildung einer 3-D Struktur aufweisen, und
wobei eine Zwischenschicht c. zwischen der Oberfläche A' der ersten Schicht a. und der Oberfläche B' der weiteren Schicht b. so angeordnet ist, dass sie in ihrer Längsausdehnung dem Verlauf der Oberflächen A' und B' folgt und die 3-D Struktur abbildet, und
wobei sich die Brechungsindices der Schichten b. und c. und der Schichten a. und c. jeweils um ≤ 0,1, bevorzugt um ≤ 0,05, mehr bevorzugt um ≤ 0,04, weiter bevorzugt um ≤ 0,03 unterscheiden, gemäß ISO 489 (Verfahren A) ermittelt.

2. Der Schichtaufbau gemäß Anspruch 1, wobei der Schichtaufbau mindestens eine der folgenden Merkmale aufweist:
(E1) die Oberfläche A der Vorderseite, also der Außenfläche der Schicht a. und die Oberfläche B der Rückseite, also der Außenseite von Schicht b. sind glatt;
(E2) die Schicht a. ist transparent;
(E3) die Schicht a. ist als ein flächiger Lichtleiter ausgebildet;
(E4) mindestens eine der Schichten b. oder c., bevorzugt beide Schichten b. und c., weist einen Absorptionsbereich im sichtbaren Spektrum auf, also eine Lichttransmission von 0 bis 50%, bevorzugt von 1 bis 45%, weiter bevorzugt von 3 bis 40%, noch weiter bevorzugt von 5 bis 35%, mehr bevorzugt von 10 bis 30%, ganz besonders bevorzugt von 15 bis 25% aufweist, bestimmt nach DIN EN ISO 13468-2:2006-7.

3. Der Schichtaufbau gemäß einem der vorhergehenden Ansprüche, wobei der Schichtaufbau das folgende Merkmal aufweist:
(E4) mindestens eine der Schichten b. oder c. weist einen Absorptionsbereich im sichtbaren Spektrum auf, also eine Lichttransmission von 0 bis 50%, bevorzugt von 1 bis 45%, weiter bevorzugt von 3 bis 40%, noch weiter bevorzugt von 5 bis 35%, mehr bevorzugt von 10 bis 30%, ganz besonders bevorzugt von 15 bis 25% aufweist, bestimmt nach DIN EN ISO 13468-2:2006-7.

4. Der Schichtaufbau gemäß einem der vorhergehenden Ansprüche, wobei die weitere Schicht c. blasenfrei mit den Schichten a. und b. verbunden ist.

5. Der Schichtaufbau gemäß einem der vorhergehenden Ansprüche, wobei die weitere Schicht c. ein transparentes, thermoplastisches Polymer beinhaltet, bevorzugt ausgewählt aus der Gruppe bestehend aus einem Polycarbonat, einem Copolycarbonat, einem Polymethylmethacrylat (PMMA), einem Polyethylenterephthalat (PET), einem Blend beinhaltend mindestens eines der vorstehenden Polymere oder einer Mischung aus mindestens zwei hiervon.

6. Der Schichtaufbau gemäß einem der vorhergehenden Ansprüche, wobei die Schicht a. mindestens eine der folgenden Eigenschaften aufweist:
a1. eine Dicke in einem Bereich von 100 µm bis 7 mm;
a2. eine Fläche in einem Bereich von 20 cm² bis 10 m²;
a3. eine Ausdehnung der gewinkelten Struktur quer zur Flächenausdehnung der Schicht a. in einem Bereich von 10 µm bis 1 cm;
a4. eine Rautiefe Rz auf der Oberfläche A nach DIN EN ISO 4287 (10/98) von maximal 10 µm;
a5. eine Transparenz in einem Bereich von ≥ 70 %;
a6. frei von Lichtstreuung im sichtbaren Spektralbereich ist.

7. Schichtaufbau gemäß einem der vorhergehenden Ansprüche, wobei die Schicht b. mindestens eine der folgenden Eigenschaften aufweist:
b1. eine Dicke in einem Bereich von 100 µm bis 7 mm;
b2. eine Fläche in einem Bereich von 1 cm² bis 10 m²;
b3. eine Rautiefe Rz auf der Oberfläche A nach DIN EN ISO 4287 (10/98) von maximal 50 µm;
b4. eine Transparenz in einem Bereich von 10 bis 100 %, bestimmt nach DIN EN ISO 13468-2-2006-7;
b5. frei von Lichtstreuung im sichtbaren Spektralbereich und bevorzugt im nahen infraroten Spektralbereich.

8. Der Schichtaufbau gemäß einem der vorhergehenden Ansprüche, wobei die Schicht c. mindestens eine der folgenden Eigenschaften aufweist:
cl. eine Dicke in einem Bereich von 10 µm bis 1000 µm;
c2. eine Fläche in einem Bereich von 1 cm² bis 50 m²;
c3. eine Dickenvarianz über die gesamte Fläche in einem Bereich von 0,1 bis 1µm;
c4. eine Transparenz in einem Bereich von 0 bis 99%, bevorzugt von 2 bis 90%, weiter bevorzugt von 5 bis 80%, besonders bevorzugt von 10 bis 70%, ganz besonders bevorzugt von 25 bis 30%;
c5. frei von Lichtstreuung im sichtbaren Spektralbereich und bevorzugt im nahen infraroten Spektralbereich.

9. Der Schichtaufbau gemäß einem der vorhergehenden Ansprüche, wobei der Schichtaufbau mindestens eine, bevorzugt mindestens zwei, mehr bevorzugt mindestens drei, besonders bevorzugt vier, am meisten bevorzugt alle der folgenden Eigenschaften aufweist:
(A1) eine Transparenz im Arbeitswellenlängenbereich des LiDAR-Lasers, bevorzugt im Wellenlängenbereich von 800 bis 1600 nm, charakterisiert durch eine Absorption im gesamten Laserwellenlängenbereich von kleiner als 20%, bevorzugt kleiner als 5%, mehr bevorzugt kleiner als 2%, bestimmt durch Nah-Infrarot-Spektroskopie, in Anlehnung an Vorschrift ASTM D1003;
(A2) schwach Licht streuend im sichtbaren Spektralbereich, **gekennzeichnet durch** einen Haze-Wert (Opazität, Trübung) nach ASTM D1003 von kleiner als 20%, bevorzugt kleiner als 15%, weiter bevorzugt kleiner als 10%;
(A3) eine Gesamttransmission Ty des Schichtaufbaus beträgt im sichtbaren Spektrum mindestens 1%, bevorzugt mindestens 2%, mehr bevorzugt mindestens 10%, besonders bevorzugt in einem Bereich von 1 bis 50%, bestimmt nach DIN ISO 13468-2:2006 (D65, 10°);
(A4) einen Halbwertswinkel des gestreuten Lichts im kompletten sichtbaren Wellenlängenbereich von 0 bis 15°, bevorzugt von 1 bis 10°, besonders bevorzugt von 2 bis 8°;
(A5) schwach Licht streuend im nahen Infrarot, **gekennzeichnet durch** eine Trübung, bestimmt durch Nah-Infrarot-Spektroskopie in Anlehnung an ASTM D1003, von kleiner als 5%, bevorzugt kleiner als 2%, mehr bevorzugt kleiner als 1%.

10. Ein Verfahren zur Herstellung eines Schichtaufbaus mit mindestens den Schritten:
I) Gießen eines verflüssigten Polymeren, bevorzugt ausgewählt aus der Gruppe bestehend aus Polycarbonat, Copolycarbonat, Polyestercarbonat, PMMA, PET, einem Polyurethan, einem thermoplastischen Polyurethan oder einer Mischung aus mindestens zwei hiervon in eine Form mit einer gewinkelten Oberfläche, wobei nach Verfestigung des Polymeres eine Schicht a. aus dem Polymer entsteht, die eine erste plane Oberfläche A und eine gewinkelte Oberfläche A' aufweist;
II) Auflegen einer weiteren Schicht c. auf die gewinkelte Oberfläche A', sodass die weitere Schicht c. den Verlauf der Winkelung in ihrer Längsausdehnung annimmt und eine 3D-Struktur ausbildet;
III) Gießen eines Polymeren, bevorzugt ausgewählt aus der Gruppe bestehend aus Polycarbonat, Copolycarbonat, einem Polyurethan, einem thermoplastischen Polyurethan oder einer Mischung aus mindestens zwei hiervon, auf die Schicht c. aus Schritt II) unter Ausbildung einer Schicht b. wobei die gekrümmte Oberfläche A' sich spiegelbildlich in der Schicht b. als gewinkelte Oberfläche B' widerspiegelt;
wobei sich die Brechungsindices der Schichten b. und c. und der Schichten a. und c. jeweils um ≤ 0,1, bevorzugt um ≤ 0,05, mehr bevorzugt um ≤ 0,04, weiter bevorzugt um ≤ 0,03 unterscheiden, gemäß ISO 489 (Verfahren A) ermittelt.

11. Eine Beleuchtungsanlage, bevorzugt ein Display oder ein Sensorsystem, beinhaltend mindestens
i. einen Schichtaufbau nach einem der Ansprüche 1 bis 6,
ii. eine Lichtquelle ii., die so neben der Schicht a. angeordnet ist, dass ein seitliches Einstrahlen von Licht in die Stirnseite der Schicht a. möglich ist;
iii. gegebenenfalls ein Display, wobei das Display auf der Seite der Schicht b. des Schichtaufbaus angeordnet ist, wobei die Fläche des Displays bevorzugt parallel zu der Flächenausdehnung des Schichtaufbaus ausgerichtet ist, so dass der erfindungsgemäße Schichtaufbau durchleuchtet wird;
iv. gegebenenfalls eine Lichtquelle iv., wobei die Lichtquelle iv. auf der Seite der Schicht b. des Schichtaufbaus angeordnet ist;;
v. gegebenenfalls einen Sensor, wobei der Sensor auf der Seite der Schicht b. des Schichtaufbaus angeordnet ist, wobei die Fläche des Sensors bevorzugt parallel zu der Flächenausdehnung des Schichtaufbaus ausgerichtet ist.

12. Die Beleuchtungsanlage gemäß Anspruch 11, wobei die Beleuchtungsanlage einen Teil der Karosserie eines Fahrzeugs bildet, welcher zur Kommunikation mit Personen dient.

13. Die Beleuchtungsanlage gemäß Anspruch 11 oder 12, wobei die Beleuchtungsanlage einen Teil der Fahrzeug-Innenraum-Oberfläche abdeckt, um ein HMI oder eine ambiente Beleuchtung abzubilden.

14. Die Beleuchtungsanlage gemäß einem der Ansprüche 11 bis 13, wobei es sich bei der Lichtquelle ii. um eine LED-Kantenbeleuchtung handelt.

15. Die Beleuchtungsanlage gemäß einem der Ansprüche 11 bis 14, wobei der Sensor v. ausgewählt ist aus der Gruppe bestehend aus Innenraumkameras, Innenraum-LiDARe, RADARe, Infrarot-Kameras, High Dynamic Range Kameras oder einer Kombination aus mindestens zwei hiervon.
